(19) Europäisches Patentamt

European Patent Office

Office européen des brevets

(11) EP 0 587 869 B2

(12) NEW EUROPEAN PATENT SPECIFICATION

(45) Date of publication and mention
of the opposition decision:
**11.10.2000 Bulletin 2000/41**

(45) Mention of the grant of the patent:
**07.05.1997 Bulletin 1997/19**

(21) Application number: 93908888.6

(22) Date of filing: **31.03.1993**

(51) Int. Cl.[7]: **A23L 2/00**, C11B 5/00

(86) International application number:
**PCT/EP93/00812**

(87) International publication number:
**WO 93/19626 (14.10.1993 Gazette 1993/25)**

(54) **METHOD OF IMPROVING THE AROMA AND FLAVOR OF STORED BEVERAGES**

VERFAHREN ZUR AROMAVERBESSERUNG VON GELAGERTEN GETRAENKEN

PROCEDE D'AMELIORATION DE L'AROME ET DE LA SAVEUR DES BOISSONS STOCKEES

(84) Designated Contracting States:
**DE ES FR GB IT NL PT**

(30) Priority: **03.04.1992 US 863655**
**27.11.1992 US 982494**
**27.11.1992 US 982465**

(43) Date of publication of application:
**23.03.1994 Bulletin 1994/12**

(73) Proprietor:
**L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventor: **SPENCER, Kevin C.
Hinsdale, IL 60521 (US)**

(74) Representative:
**Le Moenner, Gabriel et al
L'AIR LIQUIDE, Société Anonyme
pour l'étude et l'exploitation des procédés
Georges Claude
75, Quai d'Orsay
75321 Paris Cédex 07 (FR)**

(56) References cited:
DE-A- 3 734 025    FR-A- 2 089 899
FR-A- 2 636 918    GB-A- 1 423 464
US-A- 3 096 181    US-A- 4 259 360

- DATABASE WPIL Derwent Publications Ltd., London, GB; AN 83-719703
- DATABASE WPIL Derwent Publications Ltd., London, GB; AN 85-213070
- CHEMICAL ABSTRACTS, vol. 81, no. 13, 30 September 1974, Columbus, Ohio, US; abstract no. 76688y, KITAGAWA ET AL. 'Fruit juice preservation with inert gases.' page 76684 ; cited in the application
- REVUE DE L'EMBOUTEILLAGE ET DES INDUSTRIES DU CONDITIONNEMENT , TRAITEMENT, DISTRIBUTION, TRANSPORT no. 156, 1975, pages 13 - 20 C. GENDRON 'La conservation des liquides alimentaires sous gaz inertes'

Remarks:
The file contains technical information submitted after the application was filed and not included in this specification

EP 0 587 869 B2

## Description

### BACKGROUND OF THE INVENTION

The ability of the noble gases helium (He), neon (Ne), argon (Ar), krypton (Kr), xenon (Xe) and radon (Ra) to enter into chemical combination with other atoms is extremely limited. Generally, only krypton, xenon and radon have been induced to react with other atoms, which are highly reactive, such as fluorine and oxygen, and the compounds thus formed are explosively unstable. See Advanced Inorganic Chemistry, by F.A. Cotton and G. Wilkinson (Wiley, Third Edition). While, xenon is known to exhibit certain physiological effects, such as anesthesia, the noble gases are generally considered to be inert.

Beverages and edible oils are conventionally preserved during storage by using inert or non-reactive gases to merely displace atmospheric oxygen from their immediate vicinity. It is known that oxygen can degrade many of the aroma and flavor components of the substances.

For example, JP 3058778 (89192663) describes the storage and maturation of alcoholic drinks, such as sake, in an argon atmosphere, whereby the argon is used simply to displace oxygen.

JP 58101667 (88019147) describes sealing of citrus drinks under pressure of argon or nitrogen as an inerting agent so that bubbles are released upon depressurization which cling attractively to the pulp.

JP 60134823 describes packaging of liquid food wherein argon or nitrogen as inert gases are used to push the product into the package.

JP 7319947 (730618) describes fruit juice preservation under inert gases, wherein Argon, Helium and Nitrogen are considered equally inert.

US 3128188 describes lagering of Ruh beer under an inert atmosphere.

US 309181 describes a process for gas-packaging tomato juice or liquid food products or vegetable concentrates, wherein any inert gas or non-reactive gas including Argon, Nitrogen, Krypton, or Helium or mixtures thereof are completely equivalent.

US 3535124 describes a fresh fruit juice dispensing system in which inert gas is used to deoxygenate during spraying.

US 4803090 discloses that during cooking of foods in oils, any inert gas may be used with equivalence to displace oxygen. No significant change in the oil was noted.

Cooling of liquid foods may also be achieved using any inert or non-reactive gas. For example, see DE 2147880, ZA 7106193, FR 2107946 and GB 1371027.

US 4901887 describes a beverage dispenser which is pressurized with any inert or non-reactive gas.

WO 8600503, DE 3425088, AU 8546026, EP 189442 and DE 3448380 each disclose the use of inert or non-reactive gases in the heating of liquid food products while maintaining aroma and preventing boiling. Nitrogen or noble gases may be used equivalently as inert non-reactive gases.

DE 2736282, WO 7900092, HU H2477, GB 2021070, DD 137571, DD 137571 and EP 6888 each describe a beer road tanker charging system which uses an inert or non-reactive gas constituting any of carbon dioxide, nitrogen or noble gas, as equivalent as inert or non-reactive gases.

GB 1331533, FR 2089899, BE 765637, DE 2031068 and CH 522734 each describe a method of preserving alcoholic beverages wherein oxygen is displaced at any process stage, including storage, by preferably nitrogen. Argon or another noble gas may be used, as all are deemed to be equivalently inert or non-reactive.

Thus, at present, removal of oxygen from the atmosphere in contact with beverages and edible oils is recognized as desirable. This may be done, as noted above, by physically displacing oxygen with an inert or non-reactive gas. Generally, nitrogen is used preferentially because of its low cost and availability, except when carbon dioxide may be used, as it is even less expensive. For example, carbon dioxide may be used in sparkling beverages. While argon and noble gases have been used, they are explicitly described in the art as being as inert or non-reactive gases like nitrogen, or as carbon dioxide, and are used as such.

Orange juice is extracted by various mechanical means from whole oranges in a process which is usually exposed to oxygen. Bartholomai, A. 1987. Food Factories-Processes, Equipment, Costs (VCH Publishers, New York, N.Y.). The aroma losses due to oxidation are of greatest concern during processing and particularly during storage.

Orange juice is a complex mixture and over 150 constituents of orange juice volatiles have been reported and identified, among which 40 terpene hydrocarbons, 30 esters, 36 aldehydes and ketones, 36 alcohols and 10 volatile organic acids have been isolated. An example of a chromatogram of the extracted volatiles form orange juice is given by Papanicolaou et al., J. Food Technol. 13:51IL 519 (1978).

During storage of orange juice, aroma and flavor compounds undergo many oxidative chemical reactions, which lead to the deterioration of the aroma. These reactions may be caused by either atmospheric oxygen or by oxygen from chemical sources.

Before pasteurization of orange juice, products of oxidative enzymatic reactions can accumulate and form off-flavor compounds during storage. Bruemmer et al, J. Food Sci. 41:186-189 (1976). In unpasteurized orange juice, accumulation of acetaldehyde is probably responsible for the production of diacetyl in orange juice during storage. Diacetyl can result from oxidation of acetoin.

Orange juice contains ascorbic acid (vitamin C) which is an important antioxidant. Often, large amounts of this compound are added to commercial juice. However, it would be preferable to avoid such large additions, or to limit them, and to directly control of the chain of oxidative reactions involving ascorbic acid. Of course, oxygen degradation of aroma components in the headspace is not retarded at all by ascorbic acid, which is in solution.

Citrus juices are particularly susceptible to degradative oxidation caused by the action of oxidase enzymes or by oxygen present in the atmosphere or in solution. Displacement of this oxygen results in only a partial retardation of oxidation.

The principal problems of production quality in the citrus processing industry are clarification, color, taste, bitterness, loss of flavor, oxidation of flavor.

Proper cloud retention is a crucial quality parameter of citrus juice, which processors address by control of clarification. Loss of the appealing cloudiness of orange or other citrus juice occurs during storage due to the enzymatic action of pectinesterase. The product of pectinesterase activity is pectic acid, which chelates with divalent cations to form insoluble pectates, responsible for undesirable fruit clarification.

Presently, the only means available to stabilize (inactivate) the enzyme is heat. Unfortunately, heat is also responsible for the loss of intrinsic citrus aromas, which render citrus juices so appealing.

Naringin is the main factor responsible for bitterness in several citrus juices. Naringinase is commonly used in the citrus industry to reduce bitterness. When present in large amounts, naturally occurring naringin, or 4',5,7-trihydroxyflavanone-7-rhamnoglucoside, is responsible for a bitter taste, which is an unappealing customer trait of grapefruit and other juices. Naringinase is an enzyme complex that contains two types of enzymatic activities ($\alpha$-rhamnosidase and $\beta$-glucosidase activities), and those catalyze the breakdown of naringin into glucose and naringenin, which are not bitter.

Citrus juices can also be debittered by being passed through a hollow fiber system containing immobilized naringinase.

In preserving orange or other citrus juice, several factors are important, i.e., consistency of sweetness, tartness, color, and characteristic flavor to the consumer. Orange or other citrus juice is expected to be cloudy with suspended solids. The carbohydrate gum, pectin, helps maintain the suspension. An enzyme, pectinesterase, attacks pectin causing the juice to clarify. Some other juices are preferred to be clear (apple and cranberry, for instance). In these, enzymes may be added to promote clarification.

During storage of orange or other citrus juice, aroma and flavor compounds undergo many oxidative chemical reactions, which lead to the deterioration of the aroma. These reactions may be caused by either atmospheric oxygen or by oxygen from chemical sources.

Before pasteurization of orange or other citrus juice, products of oxidative enzymatic reactions can accumulate and form off-flavor compounds during storage (Bruemmer et al., 1976). In unpasteurized orange or other citrus juice, accumulation of acetaldehyde appears to be responsible for the production of diacetyl in orange or other citrus juice during storage. Diacetyl can result from oxidation of acetoin (Papanicolaou et al., 1978).

Moreover, orange, as well as other citrus juice, contains ascorbic acid (vitamin C) which is an important antioxidant. Often, large amounts of this compound are added to commercial juice. It would be desirable to avoid or reduce the amount of ascorbic acid added in order to have greater control over oxidative reactions involving ascorbic acid. It is also noted that oxygen degradation of aroma components in the headspace is not retarded by ascorbic acid, which is in solution.

EP 189442 describes the use of inert gases in the heating of liquid food products while maintaining aroma and preventing boiling, wherein $N_2$ or noble gases may be used equivalently.

Several citations are known which utilize argon as an inerting control in studies of oxygen-induced oxidation. In these studies, however, no effect of argon other than simple inerting is demonstrated or claimed. For example, Peers and Swoboda (1982); Unbehend et al. (1973); Schsnept et al. (1991).

While different from wine, beer is also a highly volatile fermented product in terms of flavor constituents, and is prepared according to well-understood brewing processes (Bartholomai, 1987). Continuous or batch fermentation using Saccharomyces yeast is regulated and optimized across all possible parameters including the possible storage at any stage of the working solutions or mashes. Storage under nitrogen is possible to prevent oxidation and is practiced occasionally, but most manufacturers rely upon heat or off-gases to exclude oxygen, and accept a relatively high level of oxidation as inevitable.

Hence, a need exists for a means by which diverse beverages may be preserved and/or maintained, to improve the aroma and flow thereof. In particular, a need exists for a means by which greater control can be obtained over the various oxidative reactions involved in the degradation of citrus juices, generally, and, specifically, over oxidative reactions involving ascorbic acid. A need also exists for a means by which diverse juices may be preserved and/or maintained to thereby improve the aroma and flavor thereof.

## SUMMARY OF THE INVENTION

Accordingly, it is an object of the present invention to provide a method for preserving beverages.

It is also an object of the present invention to provide a method for imporving the aroma and flavor of stored beverages.

Moreover, it is a particular object of the present invention to provide a method for improving the aroma and flavor of citrus juice, beer.

The above objects and others are provided by a method for preserving beverages, which entails contacting the beverages during at least a portion of processing or storage thereof with a noble gas, mixture of noble gases or mixtures containing at least one noble gas.

BRIEF DESCRIPTION OF THE DRAWINGS

Figure 1 illustrates a UV/VIS spectra of beer oxidation after 30 days storage under different gases as indicated.

Figure 2 illustrates a GC/MS chromatogram plot of beer volatiles after 30 days storage under argon.

Figure 3 illustrates a GC/MS chromatogram plot of beer volatiles after 30 days storage under nitrogen.

Figure 4 illustrates a GC/MS c.p. of beer volatiles after 30 days storage under oxygen.

Figure 5 illustrates a GC/MS c.p. of orange juice aroma volatiles after 30 days storage under argon.

Figure 6 illustrates a GC/MS c.p. of orange juice aroma volatiles after 30 days storage under argon.

Figure 7 illustrates a GC/MS c.p. of orange juice aroma volatiles after 30 days storage under argon.

Figure 8 illustrates a GC/MS c.p. of orange juice aroma volatiles after 30 days storage under nitrogen.

Figure 9 illustrates a GC/MS c.p. of orange juice aroma volatiles after 30 days storage under nitrogen.

Figure 10 illustrates a GC/MS c.p. of orange juice aroma volatiles after 30 days storage under nitrogen.

Figure 11 illustrates a GC/MS c.p. of orange juice aroma volatiles after 30 days storage under oxygen.

Figure 12 illustrates a GC/MS c.p. of orange juice aroma volatiles after 30 days storage under oxygen.

Figure 13 illustrates a GC/MS c.p. of orange juice aroma volatiles after 30 days storage under argon.

Figure 14 illustrates a GC/MS c.p. of beer volatiles after 30 days storage under oxygen.

Figure 15 illustrates a GC/MS c.p. of beer volatiles after 30 days storage under oxygen.

Figure 16 illustrates a GC/MS c.p. of beer volatiles after 30 days storage under oxygen.

Figure 17 illustrates a GC/MS c.p. of beer volatiles after 30 days storage under oxygen.

Figure 18 illustrates a GC/MS c.p. of beer volatiles after 30 days storage under oxygen.

Figure 19 illustrates a GC/MS c.p. of beer volatiles after 30 days storage under oxygen.

Figure 20 illustrates a GC/MS c.p. of beer volatiles after 30 days storage under oxygen.

Figure 21 illustrates a GC/MS c.p. of beer volatiles after 30 days storage under nitrogen.

Figure 22 illustrates a GC/MS c.p. of beer volatiles after 30 days storage under nitrogen.

Figure 23 illustrates a GC/MS c.p. of beer volatiles after 30 days storage under nitrogen.

Figure 24 illustrates a GC/MS c.p. of beer volatiles after 30 days storage under nitrogen.

Figure 25 illustrates a GC/MS c.p. of beer volatiles after 30 days storage under nitrogen.

Figure 26 illustrates a GC/MS c.p. of beer volatiles after 30 days storage under nitrogen.

Figure 27 illustrates a GC/MS c.p. of beer volatiles after 30 days storage under nitrogen.

Figure 28 illustrates a GC/MS c.p. of beer volatiles after 30 days storage under argon.

Figure 29 illustrates a GC/MS c.p. of beer volatiles after 30 days storage under argon.

Figure 30 illustrates a GC/MS c.p. of beer volatiles after 30 days storage under argon.

Figure 31 illustrates a GC/MS c.p. of beer volatiles after 30 days storage under argon.

Figure 32 illustrates a GC/MS c.p. of beer volatiles after 30 days storage under argon.

Figure 33 illustrates a GC/MS c.p. of beer volatiles after 30 days storage under argon.

Figure 34 illustrates a GC/MS c.p. of beer volatiles after 30 days storage under argon.

Figure 35 is a schematic illustration of a production process of orange juice from oranges.

Figure 36 illustrates a GC/MS of oragne juice aroma volatiles under argon.

Figure 37 illustrates a GC/MS of orange juice aroma volatiles under nitrogen.

Figure 38 illustrates a GC/MS of orange juice aroma volatiles under oxygen.

DETAILED DESCRIPTION OF THE PREFERRED EMBODIMENTS

Beverages are particularly subject to degradative oxidation by either enzymatic degradation by oxidases, or to chemical oxidation by oxygen from headspace, solution, or autogenous sources while physical displacement of oxygen partly retards oxidation, the effect provided is generally inadequate.

In accordance with the present invention, however, a method has been surprisingly discovered for preserving beverages which entails contacting the beverages during at least a portion of storage thereof with a noble gas, mixture of noble gases or mixtures containing at least one noble gas.

Generally, as used herein, the phrase "contacting the beverages" is intended to include contacting the headspace, or the liquid surface or even below the surface of the beverages. Notably, any one or any combination of these definitions is explicitly intended to fall within the definition and scope of this phrase.

Also, as used herein, the term "noble gas" is intended to include argon, xenon, krypton and neon. Helium may be used although it is not preferred due to its ease of escape. Radon is not used as it is dangerously radioactive.

In accordance with the present invention, argon, xenon, krypton and neon may be used alone or in any combination. For example, binary mixtures of argon-xenon, krypton-xenon or xenon-neon may be used, or ternary mixtures of argon-xenon-krypton may be used, for example.

However, mixtures containing at least one noble gas with one or more other carrier gases may also be used. Carrier gases may include, for example, nitrogen, oxygen, carbon dioxide, nitrous oxide and even helium. Generally, the effect of the present invention may be obtained at a range of pressures form about near-vacuum, i.e. about

$$10^{-8} \frac{1,013 \cdot 10^5}{760} \text{ pa } (10^{-8} \text{ tow}),$$

to about $1,013 \cdot 10^7$ Pa (100 atmospheres).

However, it is generally preferred that a pressure be used between $0,001 \cdot 1,013 \cdot 10^5$ Pa to $3 \cdot 1,013 \cdot 10^5$ Pa (about 0.001 to about 3 atmospheres). Further, a range of temperature is generally used which is the same as the operable and preferred temperatures of storage for beverages and for different stages of processing. For example, such temperatures may range from freezing temperatures to cooking temperatures. However, lower temperatures and ambient temperatures are generally used for storage.

As noted above, a single noble gas, such as argon, or a mixture of noble gases may be used in accordance with the present invention. However, mixtures containing at least one noble gas and one or more carrier gases may also be used.

Any relative mix of the gases may be used as long as the preserving effect of the noble gas component or components outweighs any oxidative effects of the carrier gases, such as oxygen. Generally, however, each noble gas may be used in such mixtures in the amount of from above 0 to 100 volume % or at any value in between. Further, any relative mix, i.e. of from above 0 % to 100 volume %, may be used for the binary mixtures. Of course, the total amount of the gas is 100 volume %.

For example, in accordance with the present invention it is advantageous to use inexpensive production plant offstream gases having a composition of about 90% kr and 10% Xe in volume %, based on the total gas volume.

It is also advantageous to use mixture containing an effective amount of one or more nobel gases in deoxygenated air. Generally, as used herein, the term "deoxygenated air" is intended to mean air having generally less than 15 volume % or 10 volume %, preferably less than 5 volume % oxygen therein.

Further, the gas or gas mixtures of the present invention may be used as gases or may also be introduced in the beverage or into the headspace or even above in storage means in order to form the described atmosphere.

Color improvement in beer, and especially orange juice, is dramatic and represents by itself a very surprising and significant improvement.

Flavor is also improved according to a blind taste test of each product.

As in the application jointly deposited, storage of any liquid foodstuff or beverage under any of the noble gases argon, xenon, krypton, neon, alone or in mixtures, or admixed with nitrogen or small amounts of oxygen or carbon dioxide or nitrous oxide greatly improve the retardation of oxidation as compared to that obtainable using nitrogen.

Notably, the effect of the present invention is demonstrated over a wide range of temperatures, including during cooking or pasteurization, refrigeration, and freezing, including cryogenic freezing. It is also observed under low or very high pressures.

The present invention may be used to enhance the aroma and flavor of any type of beverage, particularly during storage. In particular, however, the present invention is especially advantageous in improving the aroma and flavor of citrus fruit juices.

I. USE OF THE PRESENT INVENTION IN PRESERVING THE AROMA AND FLAVOR OF CITRUS JUICE

In accordance with one aspect of the present invention, a method is provided for preserving citrus juice or a precursor thereof by controlling the oxidative reactions which generally contribute to the degradation of citrus juices, particularly those involving ascorbic acid. Quite surprisingly, it has been discovered that this can be accomplished by contacting the citrus juice or precursor material thereof with a noble gas, mixture of noble gases or gas containing at least one noble gas during at least a portion of a production process for the citrus juice or storage of the juice or precursor.

As used herein, the term "noble gas" is intended to include argon, xenon, krypton and neon. Helium does not work, and radon is radioactive and not useful.

It is explicitly contemplated herein that the term "citrus" be interpreted as broadly as is scientifically recognized. Thus, lemons, oranges, limes, grapefruit, tangerines, and tangelos, for example, may be used. Also, the term "citrus" is intended to include parts of fruit, such as rinds and pulp, as well as extracts therefrom.

In accordance with the present invention, argon, xenon, krypton and neon may be used alone or in any combination. For example, binary mixtures of argon-xenon, krypton-xenon or xenon-neon may be used, or ternary mixtures of argon-xenon-krypton may be used, for example.

However, mixtures containing at least one noble gas with one or more other carrier gases may also be used. Carrier gases may include, for example, nitrogen, carbon dioxide, nitrous oxide, helium and oxygen at low concentration. Preferably, however, the carrier gas is an inert gas, such as nitrogen.

Generally, the effect of the present invention may be obtained at a range of pressures form about near-vacuum, i.e., about

$$10^{-5} \frac{1,013 \cdot 10^{-5}}{760} \text{ Pa } (10^{-8} \text{ torr}),$$

to about $1,013 \cdot 10^{7} \cdot$ Pa (100 atmospheres).

However, it is generally preferred that a pressure be used between $1,013 \cdot 10^{2}$ to $1,013 \cdot 10^{6}$ Pa (about 0.001 to about 10 atmospheres), more preferably between $1,013 \cdot 10^{2}$ Pa to $3 \cdot 1,013 \cdot 10^{5}$ Pa (about 0.001 to about 3 atmospheres). Further, a range of temperature is generally used which is from freezing temperatures to cooking temperatures, such as about -20°C to about 300°C. However, lower temperatures and ambient temperatures are generally used for storage.

As noted above, a single noble gas, such as argon, or a mixture of noble gases may be used in accordance with the present invention. However, mixtures containing at least one noble gas and one or more carrier gases may also be used.

In accordance with the present invention, it has also been unexpectedly discovered that if instead of solely blanketing the headspace above a citrus juice or precursor stored in containing means, such as a tank or a bottle with any kind of inert gas, a gas or gas mixture containing an element selected from the group consisting of argon, krypton, xenon and neon or a mixture thereof is sparged into the citrus juice or precursor and/or injected above the citrus juice and/or precursor in order to saturate or substantially saturate said citrus juice and/or precursor with the gas or gas mixture, it is possible to substantially improve the color and/or the flavor and/or the aroma and/or the shelf life of the citrus juice and/or precursor, particularly when the saturation or substantial saturation is maintained throughout the volume of the storage container and during substantially all the time that the citrus juice and/or precursor is stored in said container.

The term "substantially saturate" means that it is not necessary to completely and/or constantly saturate the citrus juice and/or precursor with the gas or gas mixture (i.e., having the maximum amount of gas solubilized in the citrus juice and/or precursor). Usually, it is considered necessary to saturate the citrus juice and/or precursor to more than 50% of its (full) saturation level and preferably more than 70%, while 80% or more is considered the most adequate level of saturation of the citrus juice or precursor. Of course, supersaturation is also possible. This means that if during the storage life of the citrus juice or precursor in the container, the citrus juice or precursor is not saturated with noble gas at least from time to time or even quite longer if it remains generally substantially saturated, results according to the invention are usually obtained. While it is believed that it is important that the entire volume of the container be saturated or substantially saturated with one of the above gas or a mixture thereof, it is quite possible to obtain the results according to the invention if a part of the volume is not saturated during preferably a limited period of time or is less saturated or substantially saturated than other portions of the volume of the citrus juice or precursor in the container.

While at least one of the above gases must be present in order to obtain the benefits of the invention, said gases can be diluted with some other gases, in order to keep for example the invention economically valuable. Said diluent gases are preferably selected from the group comprising nitrogen, oxygen, nitrous oxide, air, helium or carbon dioxide. In case of an oxygen-containing gas or another reactive gas such as carbon dioxide, their degradative properties are such that these properties will mask the effect of noble gases, certainly in mixtures where they comprise 50% vol. or more and possibly 30% vol. or more. When those mixes comprise 0% to 10% vol. of these other gases, the noble gases referred to above are still extremely effective, while between 10% vol. and 20% vol. they are usually still effective, depending on the type of gases and conditions, which might be easily determined by the artisan.

In case of nitrogen and/or helium gas, the effect of noble gases consisting of Ar, Ne, Kr, Xe in the mixture is linearly proportional to its concentration in the mixture, which evidences that nitrogen and/or helium have no effect on substantially preventing oxidation of citrus juice and/or precursor thereof. The mixture of noble gas and nitrogen and/or helium can thus comprise any amount (% volume) of nitrogen and/or helium: however, in practice, the lesser the proportion of noble gas selected from the group consisting of Ar, Ne, Kr and Xe, the larger the time required to achieve saturation or substantial saturation of the citrus juice and/or precursor thereof.

Among the active gases (Ar, Kr, Xe, and Ne), it is preferred to use argon because it is cheaper than the other active gases. However, mixtures of argon and/or krypton and/or xenon are at least as effective as argon alone. It has also been unexpectedly found that mixtures comprising between 90 to 99% vol. argon and 1 to 10% Xe and/or Kr are usually the most effective as exemplified in the further examples (whether or not they are diluted with nitrogen, helium, or nitrous oxide). The difference in effect between the active gases defined hereabove and nitrogen have been also evidenced by the fact that mixtures of argon and oxygen or carbon dioxide have a similar (while decreased) effect than argon alone, while nitrogen mixed with oxygen or carbon dioxide evidenced no protective or preservative effect compared to oxygen or carbon dioxide alone.

It is believed that the saturation or substantial saturation of the citrus juice and/or precursor is an essential feature of the invention and that no one in the prior art has ever disclosed nor suggested said feature.

Generally speaking, Xe is the most efficient gas according to the invention, followed by Kr, Ar and Ne. Among the suitable mixes, either pure or diluted with $N_2$, He, $N_2O$ (or even air, oxygen or a small amount of hydrogen) are the Ne/He mix comprising about 50% vol. of each, and the Kr/Xe mix comprising about 5-10% vol. Xe and about 90-95% vol. Kr, with a small amount of argon and/or oxygen (less than 2% vol.) or nitrogen (less than 1% vol.).

The temperatures at which the invention is carried out is usually between about 0°C to 60°C, and preferably about 10°C and 30°C.

The injection of the gas or gas mixture into the wine and/or into the container, e.g. by sparging is usually done at about $1,013 \cdot 10^5$ Pa (1 atmosphere) but is still quite operable at $2 \cdot 1,013 \cdot 10^5$ or $3 \cdot 1,013 \cdot 10^5$ Pa (2 or 3 atmospheres), while saturation is increased at higher pressures. The pressure of the gas above the citrus juice and/or precursor in the container shall be, in any case, preferably lower than $1,013 \cdot 10^6$ Pa (10 atmospheres) and it is usually acceptable to maintain it lower than $3 \cdot 1,013 \cdot 10^5$ Pa (3 atmospheres).

Saturation or substantial saturation of the wine can be measured by various methods well-known by the man skilled in the art, including but not limited to thermogravimetric analysis or mass change weighting.

There are a variety of standard methods available for the detection, qualitative and quantitative measurement of gases, and several are especially well suited for the determination of degree of saturation of noble gases into liquid samples.

Samples generally are completely evacuated as a control for zero % saturation. Such samples may then be completely saturated by contact with noble gases such that no additional noble gas will disappear from a reservoir in contact with the sample. Such saturated samples may then have their gas content driven off by trapped evacuation or by increase in temperature, and said gas sample identified quantitatively and qualitatively. Analysis is of trapped gases, reservoir gases, or some other headspace of gases, not directly of the sample.

Direct sample analysis methods are available, and include comprehensive GC/MS analysis, or by mass or thermal conductance or GC analysis and comparison with calibrated standards.

The simplest method is GC/MS (gas chromatography/mass spectrometry), which directly determines gas compositions. By preparing a standard absorption curve into a given sample for a series of gases and mixtures, one can accurately determine the degree of saturation at any point in time.

GC/MS is applied to the gas itself, as in the headspace above a sample. The technique may be used either to determine the composition and quantity of gas or mixture being released from a sample, or conversely the composition and quantity of a gas or mixture being absorbed by a sample by following the disappearance of the gas.

Appropriate GC/MS methods include, for example, the use of a $5 \cdot 10^{-10}$ m (5 Angstrom) porous layer open tubular molecular sieve capillary glass column of 0.32 mm diameter and 25 meter length to achieve separation, isothermally e.g. at 75°C or with any of several temperature ramping programs optimized for a given gas or mixture e.g. from 35-250°C, wherein ultra-high purity helium or hydrogen carrier gas is used at e.g. $1.0$ cm$^3$/min (cc/min) flow rate, and gases are detected based upon their ionicity and quantitative presence in the sample, and characterized by their unique mass spectra.

Appropriate experimental conditions might include, for example, completely evacuating a given sample under vacuum to remove all absorbed and dissolved gases, then adding a gas or mixture to the sample and measuring a) the rate of uptake of each component as disappearance from the added gas, and/or b) the final composition of the gas headspace after equilibration. Both measurements are made by GC/MS, and either method can be used in both batch and continuous modes of operation.

A simplification of this analysis entails the use of a GC only, with a thermal conductivity detector, wherein adequate knowledge of the gas saturation process and preparation of calibration curves have been made such that quantification and characterization of gases and mixtures can be accomplished without mass spectral analysis. Such instruments are relatively inexpensive and portable.

A further simplification would depend solely upon measurement of the mass change in the sample upon uptake of various gases or mixtures, which depends upon the use of standard curves or absorption data available from the literature.

An alternate method for such mass measurements is thermogravimetric analysis, which is highly precise, wherein a sample is saturated with gas and mass changes are correlated to thermal change.

For example, in accordance with the present invention it is advantageous to use inexpensive production plant off stream gases having a composition of about 90% Kr and 10% Xe in volume %, based on the total gas volume or Ne:He 1:1.

It is also advantageous to use mixture containing an effective amount of one or more noble gases in deoxygenated air. Generally, as used herein, the term "deoxygenated air" is intended to mean air having generally less than 15 volume % or 10 volume %, preferably less than 5 volume % oxygen therein.

Further, the gas or gas mixtures of the present invention may be used as gases or may also be introduced into the citrus juice or precursor thereof or into the headspace or even above in storage means in order to form the described atmosphere.

Color improvement in the citrus juices is quite dramatic, which is, itself, a very surprising and significant improvement. Further, flavor is also improved according to a blind taste test of each product.

Storage of any citrus juice under any of the noble gases argon, xenon, krypton, neon, alone or in mixtures, or admixed with nitrogen or small amounts of oxygen or carbon dioxide or nitrous oxide greatly, and surprisingly, improve the retardation of oxidation as compared to that obtainable using nitrogen.

As already noted, the effect of the present invention is demonstrated over a wide range of temperatures, including during cooking or pasteurization, refrigeration, and freezing, including cryogenic freezing. It is also observed under low or very high pressures.

Generally, the advantages of the present invention may be obtained by contacting whole citrus fruit, portions of citrus fruit, concentrate and/or juice with the gases of the present invention at any, and preferably every, stage or the production process beginning with the peeling of the fruit.

As used herein, the term "precursor" means any natural product which may serve as a source of citrus juice or as a flavoring additive for citrus juice. Examples of precursors are whole citrus fruit, portions of the fruit including flesh, seeds or rinds or even citrus oils or citrus blossoms or even extracts therefrom.

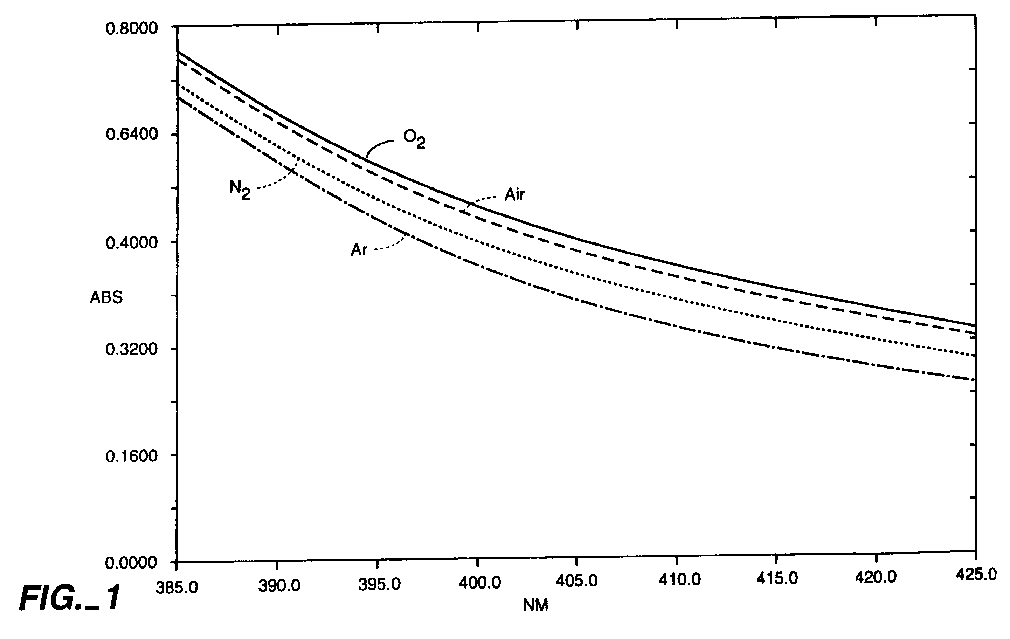

In order to further describe the present invention, the following typical production process for frozen concentrated orange juice will now be described solely to illustrate the present invention without limiting the same. This process is illustrated by reference to Figure 1.

Step 1: Unloading system for trucks.

Step 2: Storage facilities (e.g., water basin storage system) and cleaning, grading, and sizing of oranges.

Step 3: Orange peel is rich in a very automatic oil, which if present in large quantities, gives a bitter taste to the juice. Nevertheless a small amount of oil is necessary to give orange juice its original taste. Furthermore, orange essential oil is a product with a non-negligible added value, since it is used in other products as an aroma chemical. Therefore, the juice extraction machinery is designed to insure an adequate separation of the juice from the peel oil.

This first step in the extraction process is to remove the peel external layer by passing the oranges through a scarifier. The oil is transported as an emulsion (formed by spraying water) to the essential oils recovery line, where it is centrifuged.

Scarified oranges go through the juice extractor.

Step 4: Seeds and large particles such as the membrane and the core of the fruit are separated from the juice and small pulp particles through the finishing step.

Step 5: The juice in then pumped to holding tanks, where it can be blended in order to achieve uniformity (standardized color and total solids; standardized sugar and acid contents).

Step 6: The pasteurization step, which is used when marketing "pasteurized" juice, consists of heating the juice to $(145-32)^5/_9°C$-$(160-32)^5/_9°C$ (145-160°F) for 5-30 seconds. It results in inactivation of pectinesterase and in reduction of the microbial flora. Heat treating steps are severely controlled in attempting to minimize the loss of fresh flavor.

In some processes, the juice is depulped prior to evaporation. After being preheated to 80°C in a plate preheater, the amount of pulp is reduced from 10% to 1-2% by centrifugation. The juice is then cooled down to 50-60°C in a heat exchanger.

Step 7: The juice is preheated by flowing through a heat exchanger before reaching the evaporator.

Step 8: Concentration of the juice is achieved by evaporation, which is done under vacuum and at the lowest temperature possible to avoid the development of a cooked flavor. Evaporation results in unavoidable loss of flavor. The juice is concentrated past (55° - Brix) to the commercial concentration level (42° - Brix). To solve the problem of loss of flavor volatiles during the evaporation, several industrial alternatives have been considered.

Some recovery processes (e.g. distillation) of the flavor from the first stage of the evaporation are commercially used. The resulting flavor essence can be added back to the final product.

Concentration can be achieved by other means than evaporation, such as freeze concentration, reverse osmosis or filtration through selective membranes, which are low temperature processes. In these cases there is no heat-induced enzymatic inactivation.

Freeze concentration can be achieved in various ways. The juice can be passed through a scraped surface heat exchanger, or frozen by direct contact with a cryogenic liquid such as liquid nitrogen. Separation of the ice from the orange slurry is done by centrifugation or column washing to yield the concentrate. Freeze concentration causes a problem of solids loss.

Step 9: To counterbalance the loss in flavor, a determined percentage of fresh untreated juice is added to the overconcentrated juice. The final product has a percentage of solid concentrate of 42% (42° - Brix) and a flavor closer to that of fresh orange juice.

Step 10: The concentrate is transformed to a slush by passing it through a chilled scraped surface heat exchanger. It is then frozen solid after being packaged into containers (e.g., cans, or drums for further industrial use).

Step 11: The by-products of this process (50% of the orange) are the dried peel (animal feed), citrus molasses (concentrated waste water), oil (flavor chemical), citrus flour (dried pulp, albedo, core, membranes).

Further Processing: Citrus Fruit Juice Reconstituted from Concentrate

The water used for the reconstitution from the orange or other citrus concentrate is treated by passing through a ressurizing group, a dechlorination filter, and a sterilizing station.

Sugar is weighed, melted in a sugar melting tank, and passed through a syrup filter.

Concentrate is pumped, weighed, and mixed in the appropriate ratio with the syrup in mixing tanks.

The reconstituted fruit juice is then pasteurized through a heat exchanger, packaged and cooled down in a cooling tunnel.

The orange or other citrus juice is packaged and cooled down after step 6 of the above described Concentrate Production Process.

The present invention thus provides many advantageous aspects, some of which may be noted.

First processing and storage of orange or other citrus juice under any of the noble gases argon, xenon, krypton, neon, alone or in mixtures, or admixed with nitrogen or small amounts of oxygen or $CO_2$ or $N_2$ or He, greatly, and surprisingly, improve the retardation of oxidation as compared to that obtainable using nitrogen.

Second contacting the fruit or juice at any of the processing steps of peeling, extraction, pressing, separation, pumping, blending, holding storage, depulping, pasteurization, heating, evaporating, concentrating, freeze-concentrating, reblending, aroma recovery, reconstitution, or further processing, with noble gases greatly improves the flavor and fragrance, appearance, color, and quality of the intermediate and final products.

This improvement is demonstrated at a wide range of temperatures, including during heating or pasteurization, refrigeration, and freezing, including cryogenic freezing, and is effective under low or very high pressures.

Additionally, the noble gases, preferably argon, are more effective than nitrogen or carbon dioxide, and the effect is directly proportional to the degree of saturation of the product with noble gas.

Having generally described the present invention, reference will now be made to certain examples which are provided solely for purposes of illustration and which are not intended to be limitative.

EXAMPLE I

Several varieties of orange or other citrus juice including fresh squeezed, reconstituted from concentrate, and pasteurized versions of these, were subjected to GC/MS analysis of headspace after being stored variously under Ar, Xe, Kr, Ne, He, $N_2$, $CO_2$, $N_2O$, $O_2$, Air, and decile binary and ternary combinations of these gases.

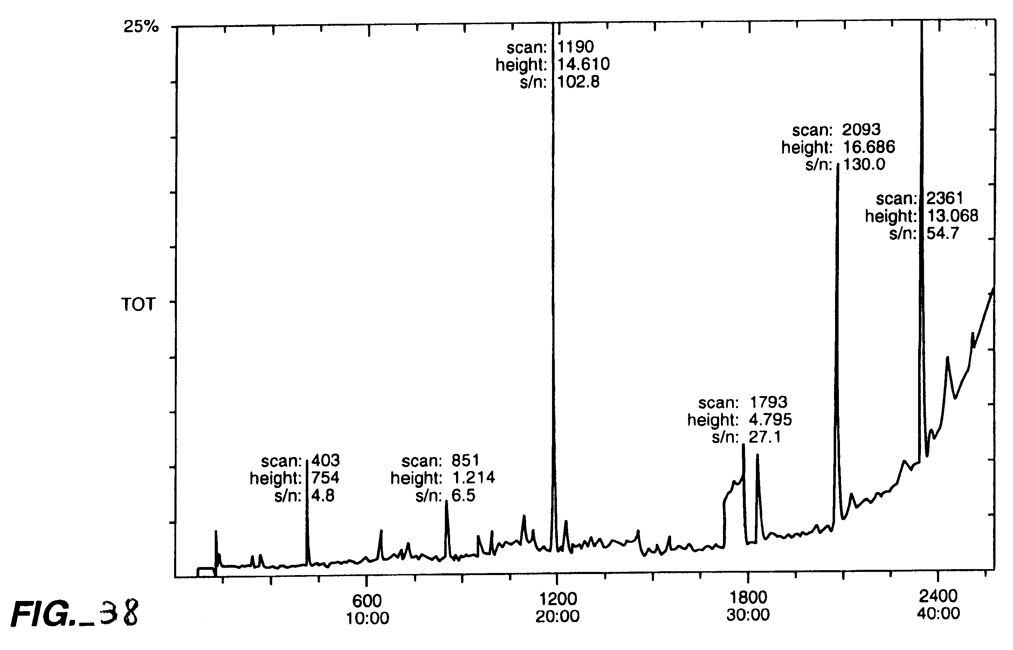

Figure 38 illustrates a GC/MS of orange juice aroma volatiles under argon. The various parameters applicable are recited on Figure 38.

Figure 39 illustrates a GC/MS of orange juice aroma volatiles under nitrogen. The various parameters applicable are recited on Figure 39.

Figure 40 illustrates a GC/MS of orange juice aroma volatiles under oxygen. The various parameters applicable are recited on Figure 40.

From a comparison of Figures 38, 39 and 40, the damaging effect of oxygen may be seen, whereas the surprisingly superior effect of argon as compared to nitrogen may be seen.

Marked are the cyclohexanetetrol and tridecane peaks around 1853 seconds, which are well preserved in argon, much oxidized in nitrogen and very much oxidized in oxygen (also present is considerable siloxane column bleed).

For example, the glycosides present in the argon sample which produce peaks at 1570-1596 seconds are oxidized and not present at all in the oxygen sample, and present in trace quantities in the nitrogen sample. The same progressive oxidation differences are observed for the nitrile at 870 secs, the acid esters at 1040 secs, the pyrans at 1149 secs, the substituted cyclohexanone at 1217 secs, the substituted propanol at 1378 secs, and the substituted cyclohexane at 1490 secs (identifications tentative from NBS data library).

A sum of differences method was used to average quantitative improvement across many compounds, and it was observed that, generally, a 25-30% improvement in shelf life can be easily obtained using argon, for example, in accordance with the present invention.

In order to further illustrate the effect of the present invention, the various gases and gas mixtures as noted in Tables I and II were used as storage gases for orange juice.

In the following two tables, the color of the orange juice was measured by uv/vis spectrophotometer methodology, the flavor and aroma by GC/MS method and shelf life by GC/MJ methodology. The relative progress of oxidation over time using the gases and gas mixtures of the present invention was compared with air, oxygen or nitrogen storage.

An organoleptic/sensory panel of five persons tasted through blind samples the color, flavor and aroma which are congruent with and contain the above instrumental measurements. Tables I and II follow:

Table I

| Orange Juice Evaluation Effect of different gas storage atmosphere | | |
|---|---|---|
| Gas Mixes | Color | Flavor Aroma |
| $N_2$ | 64 | 60 |
| Ar | 92 | 93 |
| Ar:Kr 9:1 | 95 | 96 |
| Ar:Ne 9:1 | 93 | 92 |
| Ar:Xe 9:1 | 100 | 100 |
| Ar:Xe 99:1 | 99 | 98 |
| He | 65 | 63 |
| Ne | 85 | 87 |
| Kr | 93 | 94 |
| Xe | 100 | 100 |
|  |  |  |
| Air | 20 | 35 |
| $O_2$ | 0 | 0 |
| $N_2$:$O_2$ 9:1 | 30 | 35 |
| Ar:$O_2$ 9:1 | 85 | 90 |
|  |  |  |
| $CO_2$ | 30 | 55 |
| $N_2$:$CO_2$ 8:2 | 30 | 45 |
| Ar:$CO_2$ 8:2 | 50 | 70 |
| Relative scaling of effect compared to oxygen, set to 0 | | |

Table II

| Orange Juice Gas Mixtures in decile combination trials, as: | | |
|---|---|---|
| Gas Mixtures | Color | Flavor Aroma |
| Ar:$N_2$ |  |  |
| 100:0 | 92 | 93 |
| 80:20 | 86 | 88 |
| 50:50 | 77 | 79 |
| 20:80 | 68 | 72 |
| Ar:He |  |  |
| 100:0 | 92 | 93 |
| 80:20 | 87 | 88 |
| 50:50 | 75 | 76 |
| 20:80 | 66 | 71 |
| $N_2$:$O_2$ |  |  |
| 100:0 | 64 | 60 |
| 90:10 | 30 | 35 |
| 80:20 | 20 | 20 |
| 70:30 | 0 | 0 |
| Ar:$O_2$ |  |  |
| 100:0 | 92 | 93 |
| 90:10 | 85 | 90 |
| 80:20 | 70 | 78 |
| 70:30 | 60 | 65 |
| Ar:Kr:Xe |  |  |
| 60:20:20 | 100 |  |
| Relative scaling of effect compared to oxygen, set to 0 | | |

As used herein, the term "substantially" generally means at least 75%, preferably at least about 90%, and more preferably about 95%. This refers not only to duration of storage but also the volume of the containing means.

The present invention will now be further illustrated by reference to certain examples which are provided solely for purposes of illustration and are not intended to be limitative.

Example 2

Several varieties of orange juice including fresh squeezed, reconstituted from concentrate, and pasteurized versions of these, were subjected to GC/MS analysis of headspace after being stored variously under Ar, Xe, Kr, Ne He, $N_2$, $CO_2$, $N_2O$, $O_2$, Air, and decile binary and ternary combinations of these gases for days.

Similar studies were conducted on several varieties of beer and ale. Beer was also studied by ultraviolet/visible spectrophotometry.

Figure 1 shows UV/VIS spectra of beer oxidation after 30 days storage under gas, and clearly demonstrates the improved retardation of oxidation of beer under argon versus that under nitrogen. The retardation is 35% overall for up to 2 years.

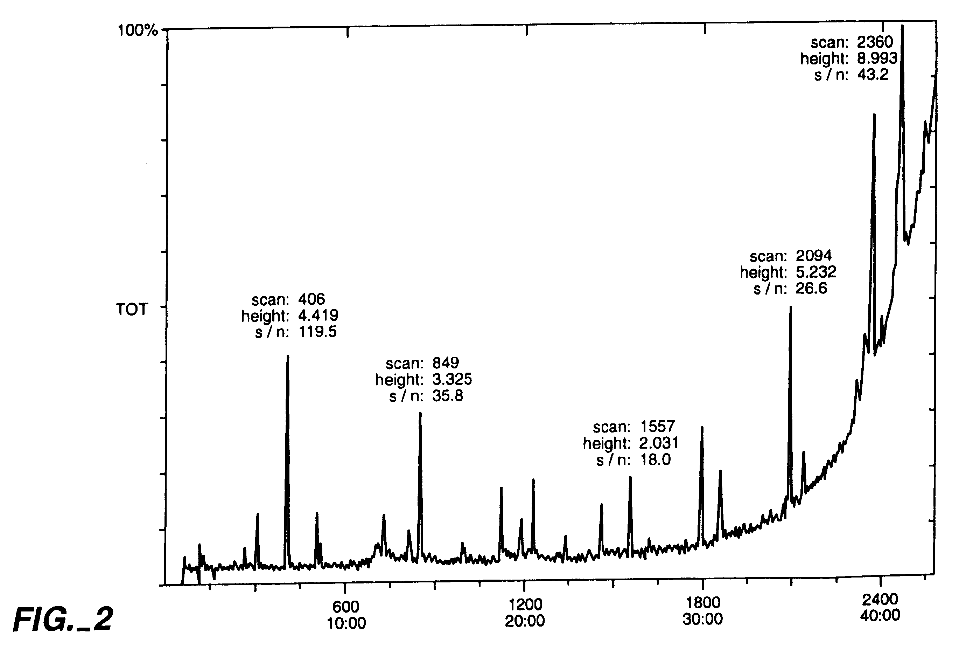

Figures 2-4 show GC/MS of beer under Ar, $N_2$ and $O_2$, respectively. It can readily be determined from these figures that beer volatiles degrade more rapidly under nitrogen than under argon due to oxidation.

For example, the peak at 1115 seconds is an oxidation product which increases relative to the peak at 1234 seconds during oxidation. The ratio shows oxidation under $O_2 > N_2 > Ar$, the improvement due to argon being about 25% after 30 days relative to $N_2$. Other examples of this improvement are found in peaks at 750, 1190, 1225, 1520, 1840, 1890, 1933, and 2360 seconds.

A National Bureau of Standards (NBS) Library Search supports the identification of the above peaks as corresponding to an imidazole, a substituted biclooctane, a substituted tridecane, an alcohol, possibly pentadecanol, cyclohexane tetrol, a tetradecane diol, a glycoside and a substituted benzoic acid, respectively.

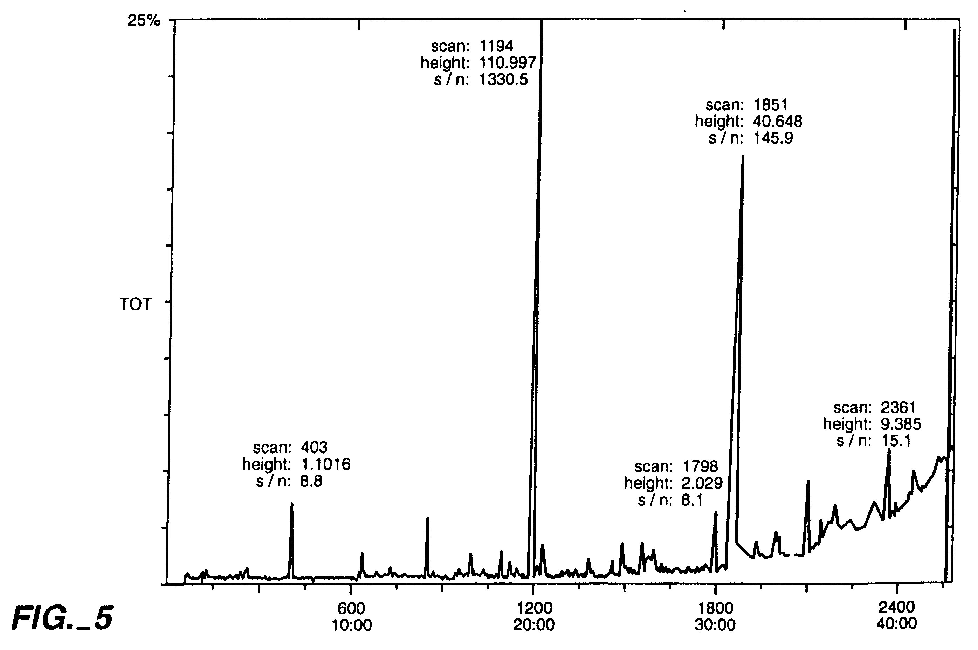

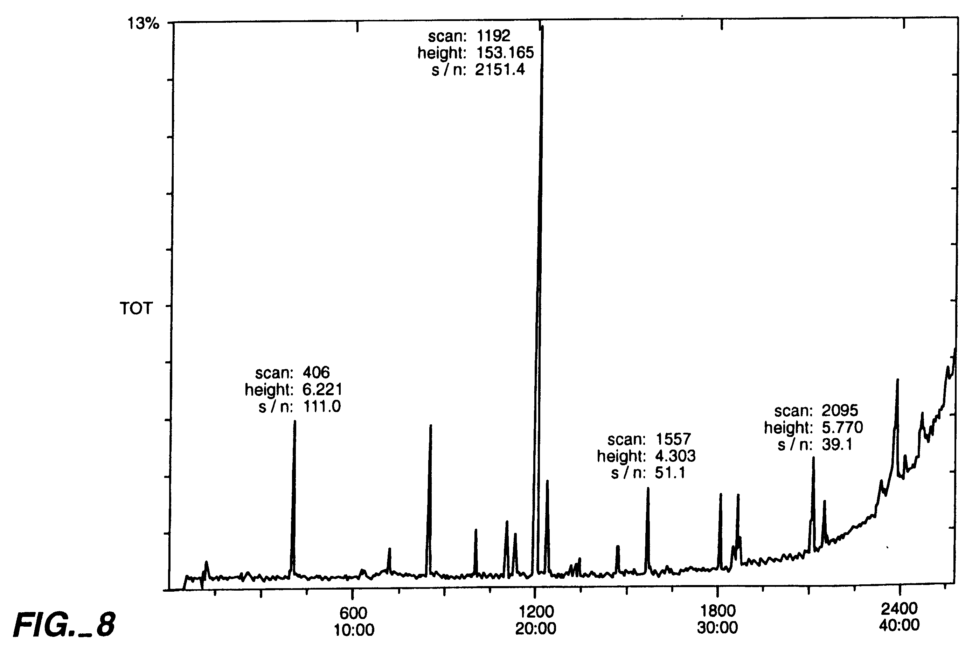

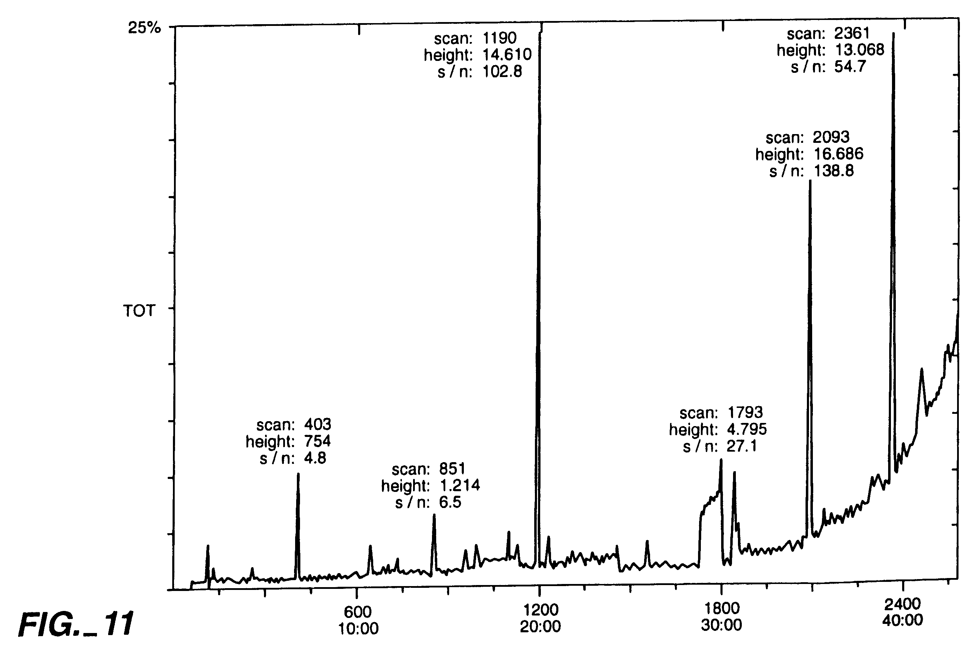

Figures 5-7 show GC/MS of orange juice aroma volatiles under Ar, Figures 8-10 $N_2$, and Figures 11-13 $O_2$, respectively. It can be seen by comparison of the peaks from these figures that oxidation is better retarded by Ar than by $N_2$.

Marked are the cyclohexane tetrol and tridecane peaks around 1853 seconds, which are well preserved in argon, much oxidized in nitrogen and very much oxidized in oxygen (also present is considerable siloxane column bleed).

For example, the glycosides present in the argon sample which produce peaks at 1570-1596 seconds are oxidized and not present at all in the oxygen sample, and present in trace quantities in the nitrogen sample. The same progressive oxidation differences are observed for the nitrile at 870 secs, the acid esters at 1040 secs, the pyrans at 1149 secs, the substituted cyclohexanone at 1217 secs, the substituted propanol at 1378 secs, and the substituted cyclohexane at 1490 secs (identifications tentative from NBS data library).

A sum of differences method was used to average quantitative improvement across many compounds, and it was found that generally a 25-30% improvement in shelf life can be obtained easily using argon.

Figure 1 illustrates a UV/VIS spectra of beer oxidation after 30 days storage under different gases as indicated.

Figure 2 illustrates a GC/MS chromatogram plot of beer volatiles after 30 days storage under argon.

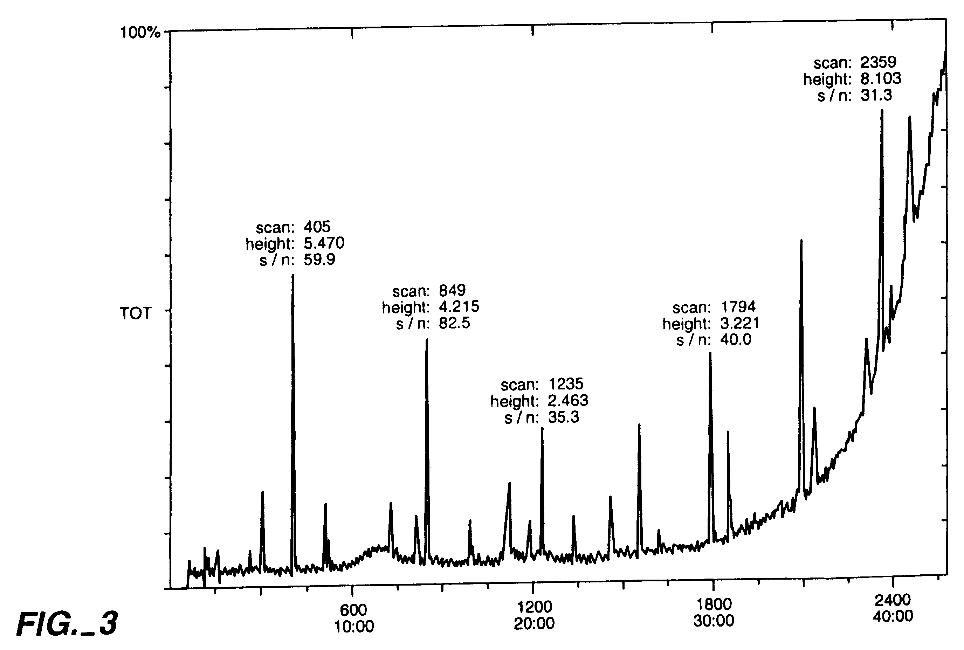

Figure 3 illustrates a GC/MS chromatogram plot of beer volatiles after 30 days storage under nitrogen.

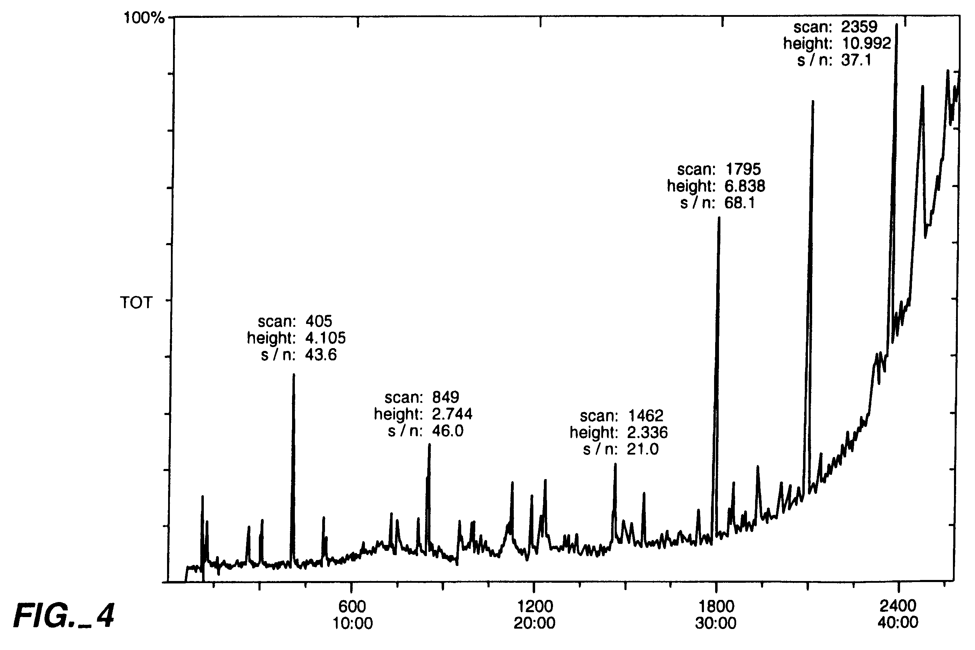

Figure 4 illustrates a GC/MS c.p. of beer volatiles after 30 days storage under oxygen.
Figure 5 illustrates a GC/MS c.p. of orange juice aroma volatiles after 30 days storage under argon.

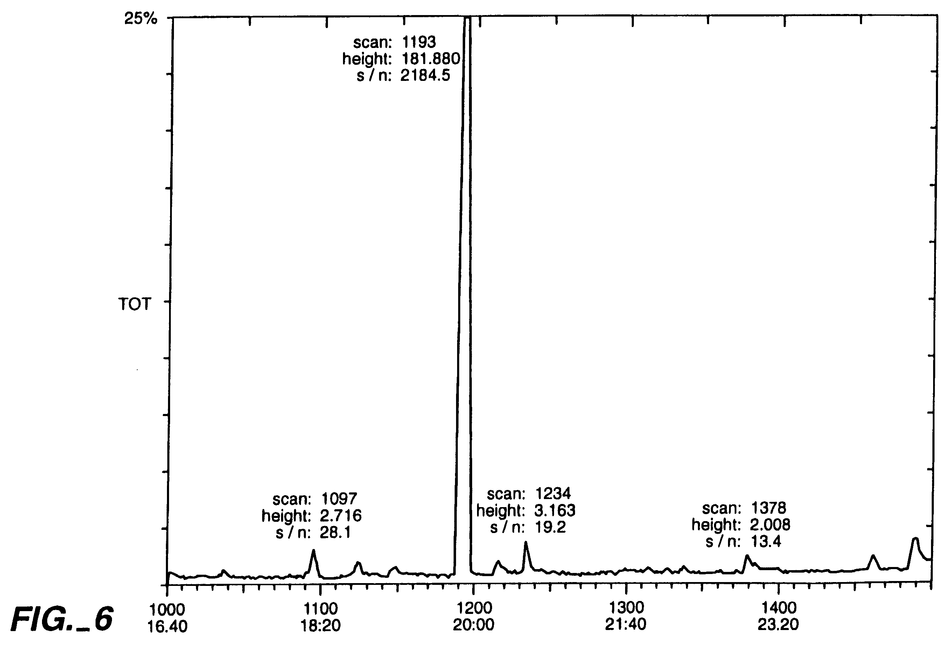

Figure 6 illustrates a GC/MS c.p. of orange juice aroma volatiles after 30 days storage under argon.

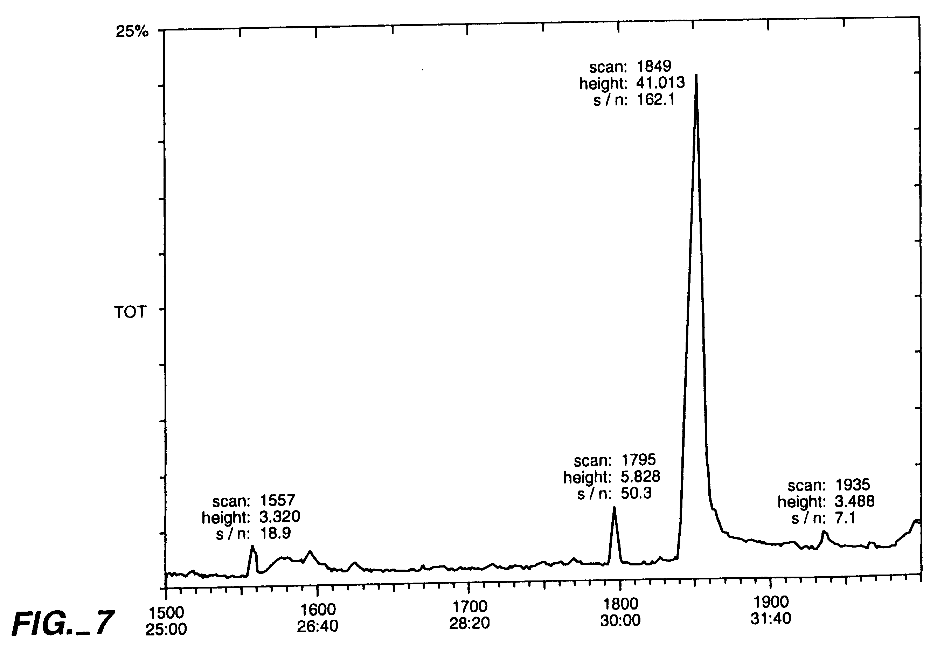

Figure 7 illustrates a GC/MS c.p. of orange juice aroma volatiles after 30 days storage under argon.
Figure 8 illustrates a GC/MS c.p. of orange juice aroma volatiles after 30 days storage under nitrogen.

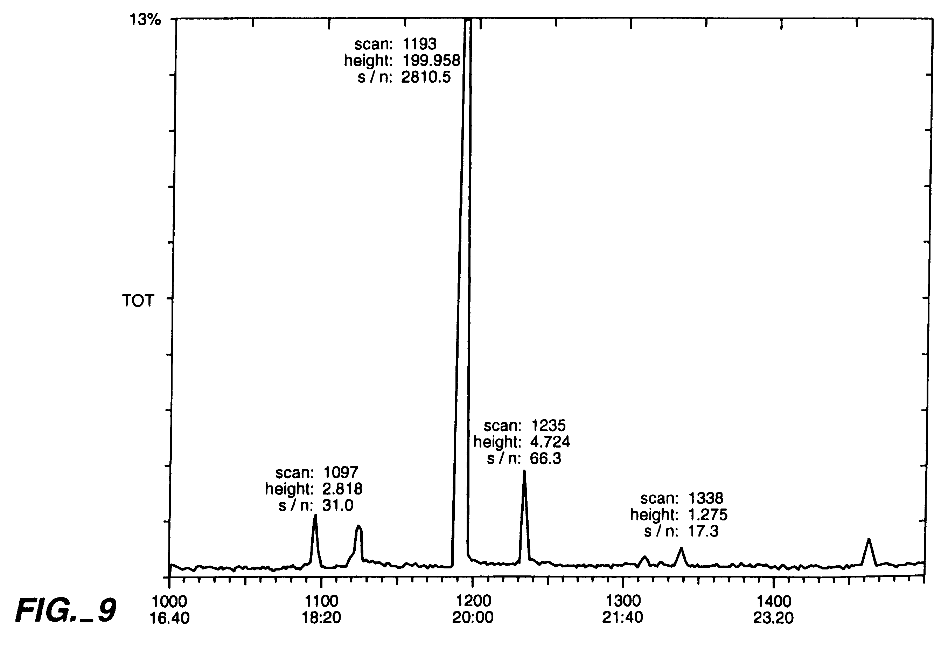

Figure 9 illustrates a GC/MS c.p. of orange juice aroma volatiles after 30 days storage under nitrogen.

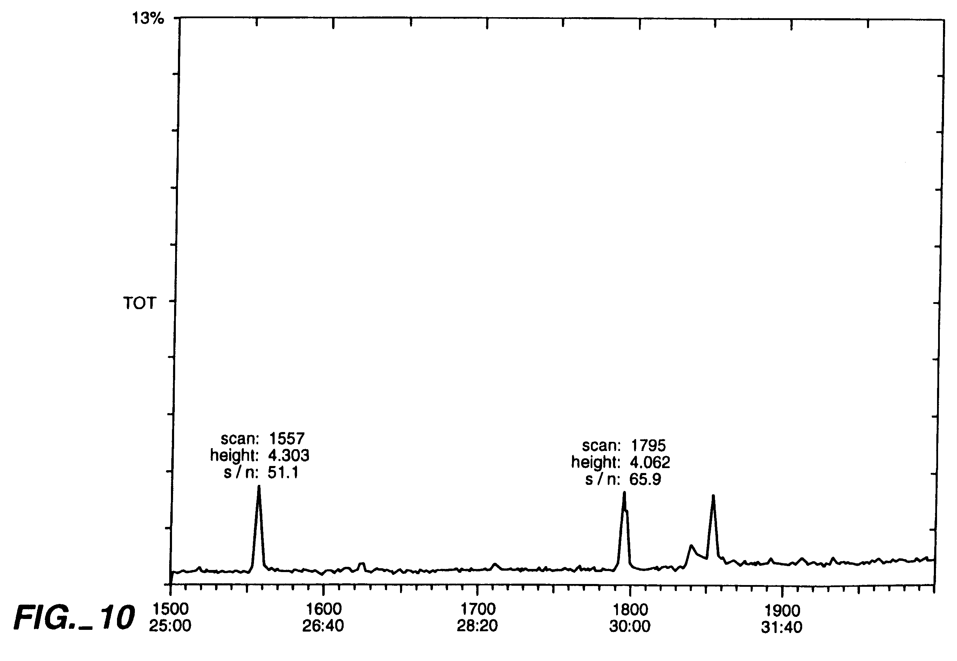

Figure 10 illustrates a GC/MS c.p. of orange juice aroma volatiles after 30 days storage under nitrogen.
Figure 11 illustrates a GC/MS c.p. of orange juice aroma volatiles after 30 days storage under oxygen.

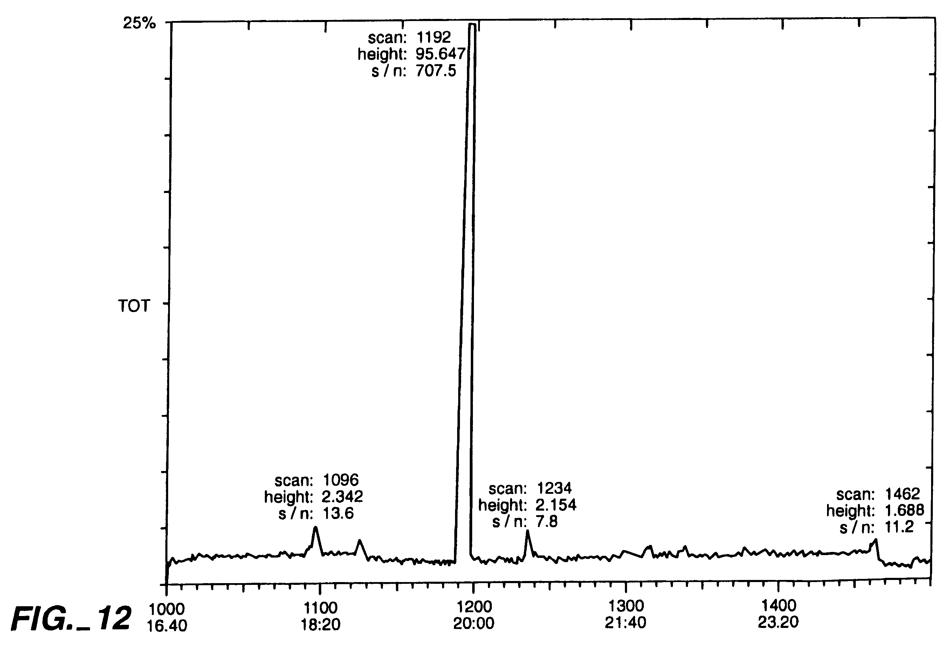

Figure 12 illustrates a GC/MS c.p. of orange juice aroma volatiles after 30 days storage under oxygen.

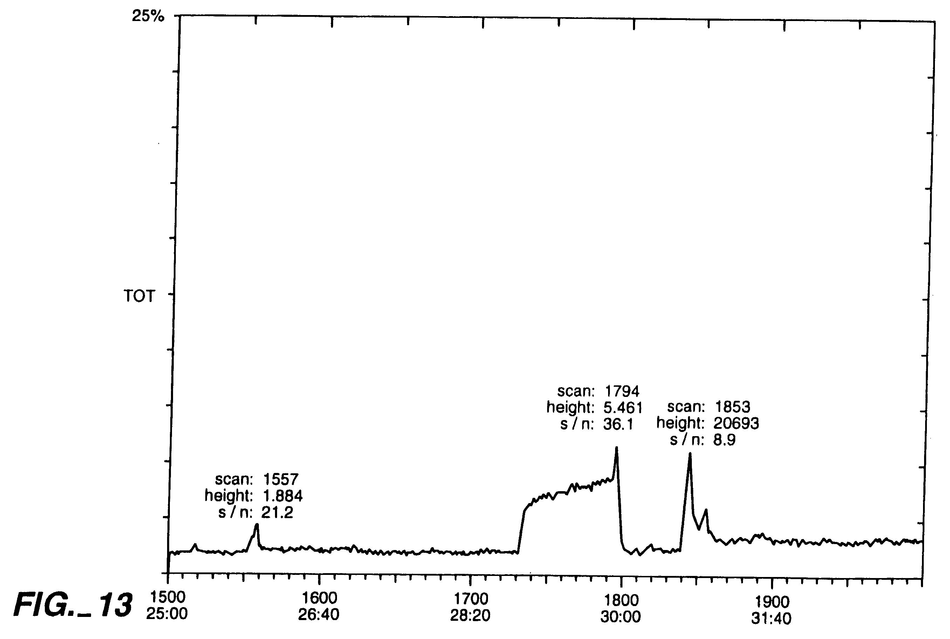

Figure 13 illustrates a GC/MS c.p. of orange juice aroma volatiles after 30 days storage under argon.

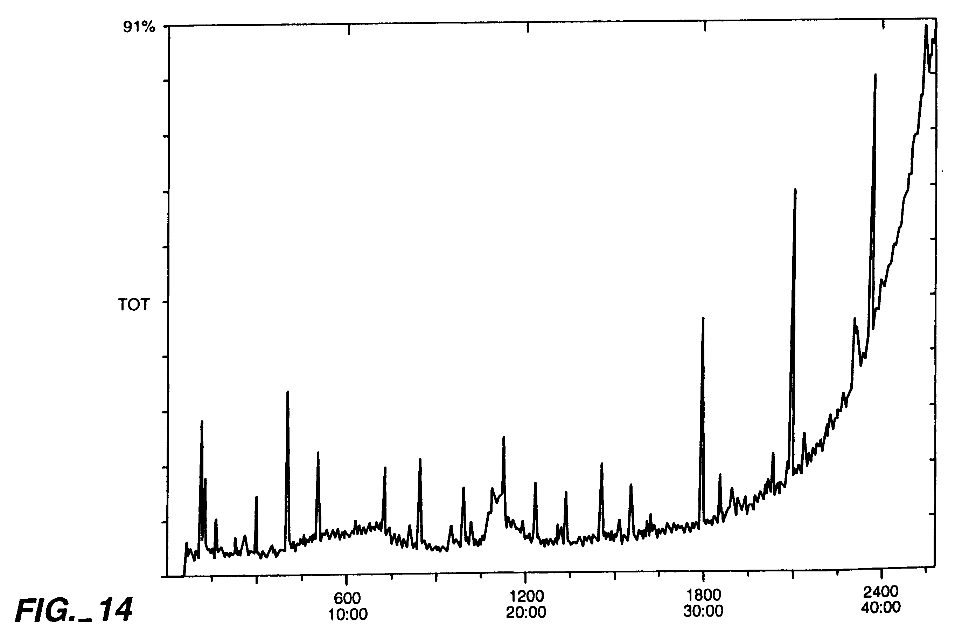

Figure 14 illustrates a GC/MS c.p. of beer volatiles after 30 days storage under oxygen.

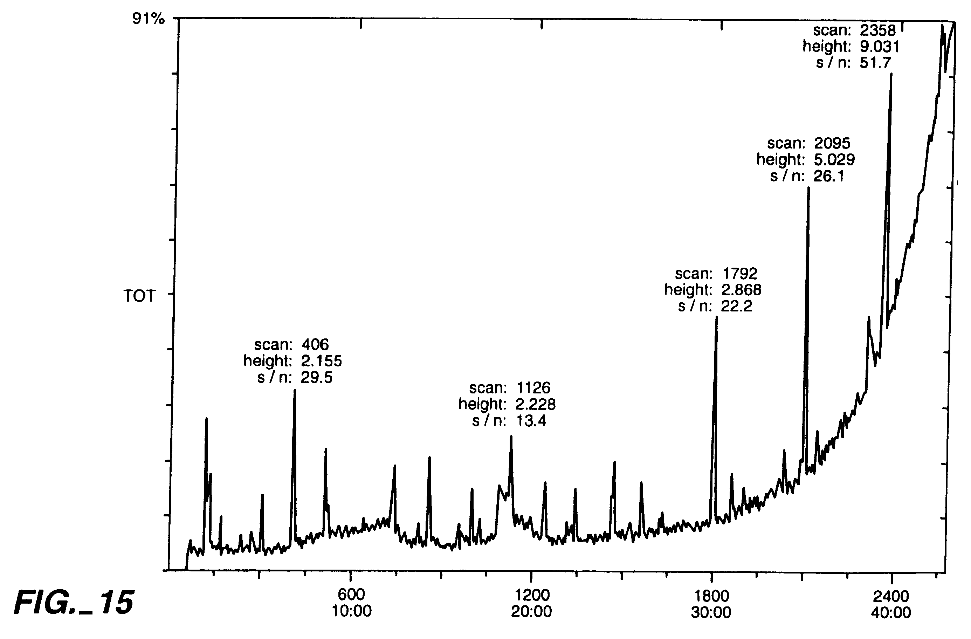

Figure 15 illustrates a GC/MS c.p. of beer volatiles after 30 days storage under oxygen.

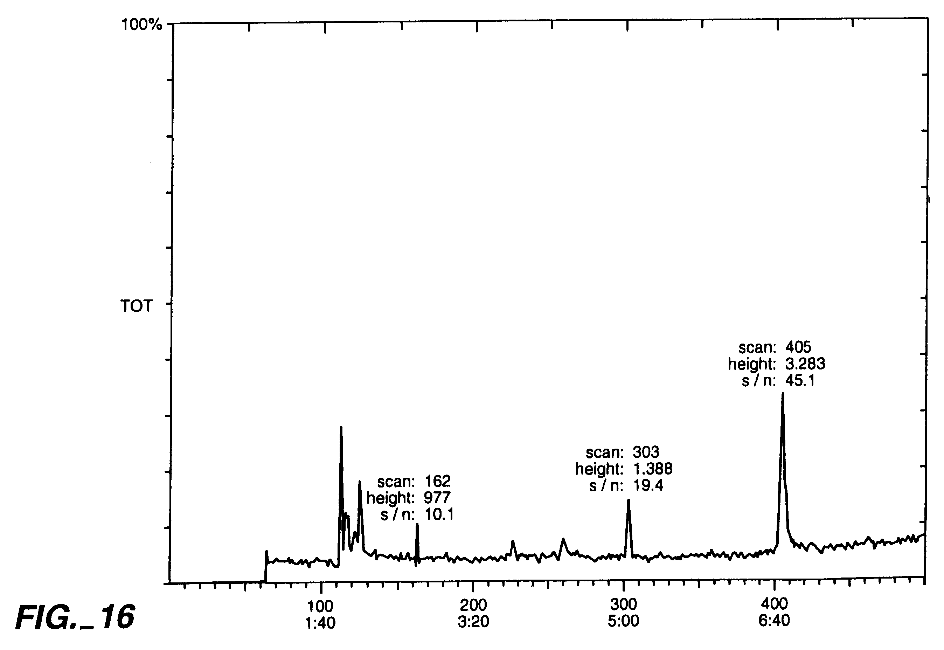

Figure 16 illustrates a GC/MS c.p. of beer volatiles after 30 days storage under oxygen.

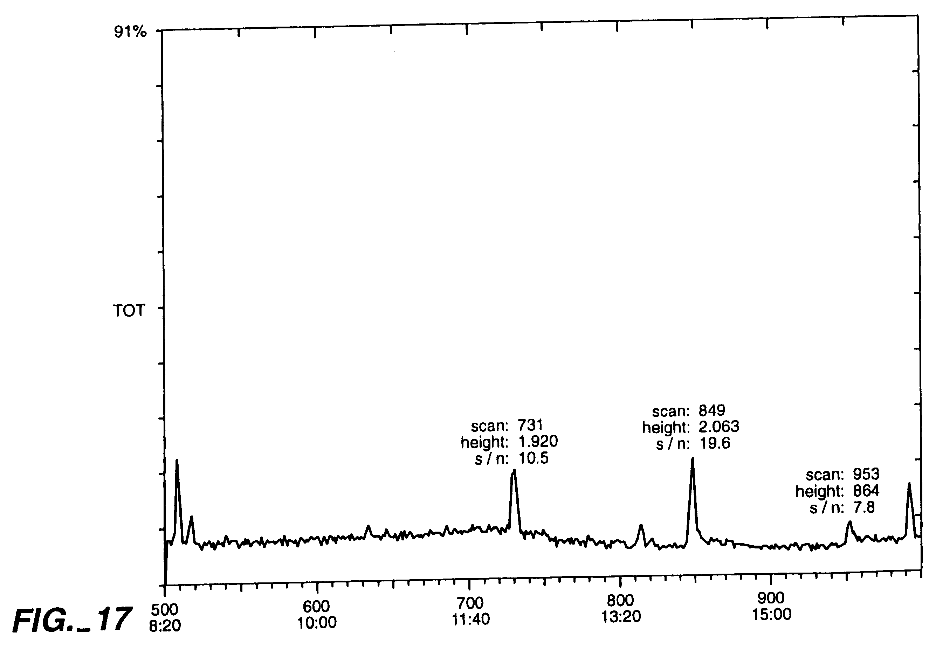

Figure 17 illustrates a GC/MS c.p. of beer volatiles after 30 days storage under oxygen.

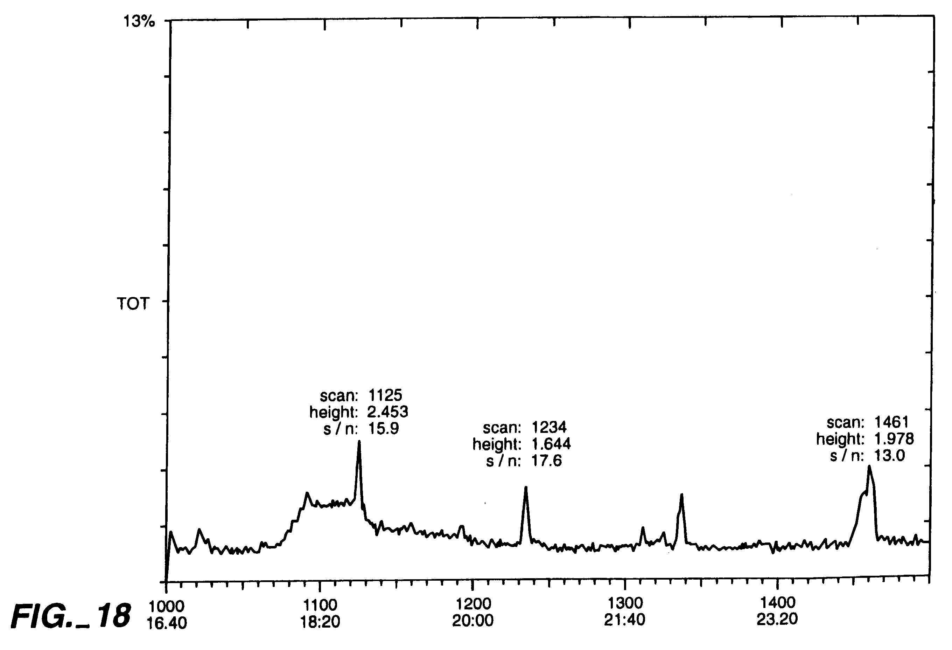

Figure 18 illustrates a GC/MS c.p. of beer volatiles after 30 days storage under oxygen.

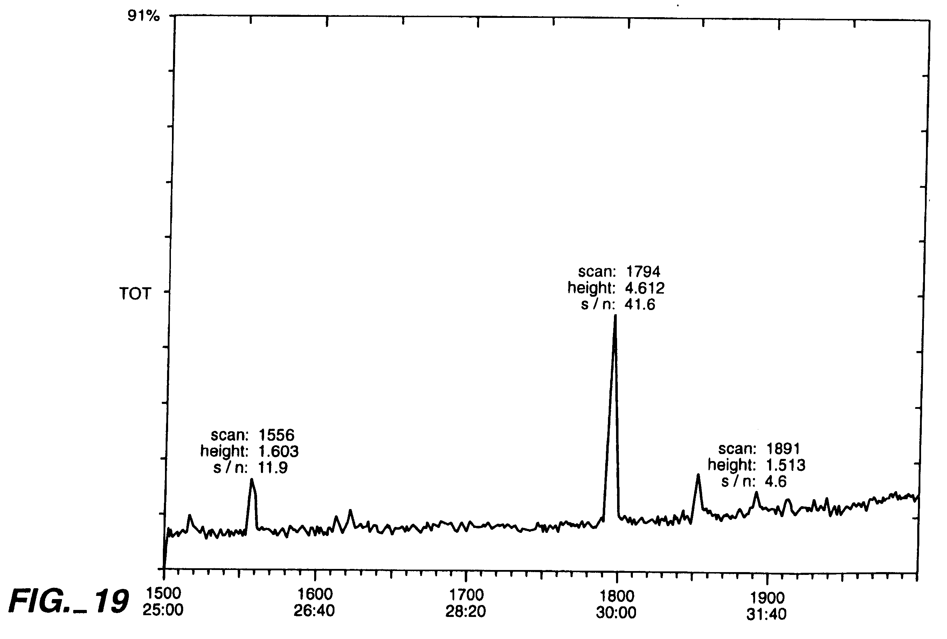

Figure 19 illustrates a GC/MS c.p. of beer volatiles after 30 days storage under oxygen.

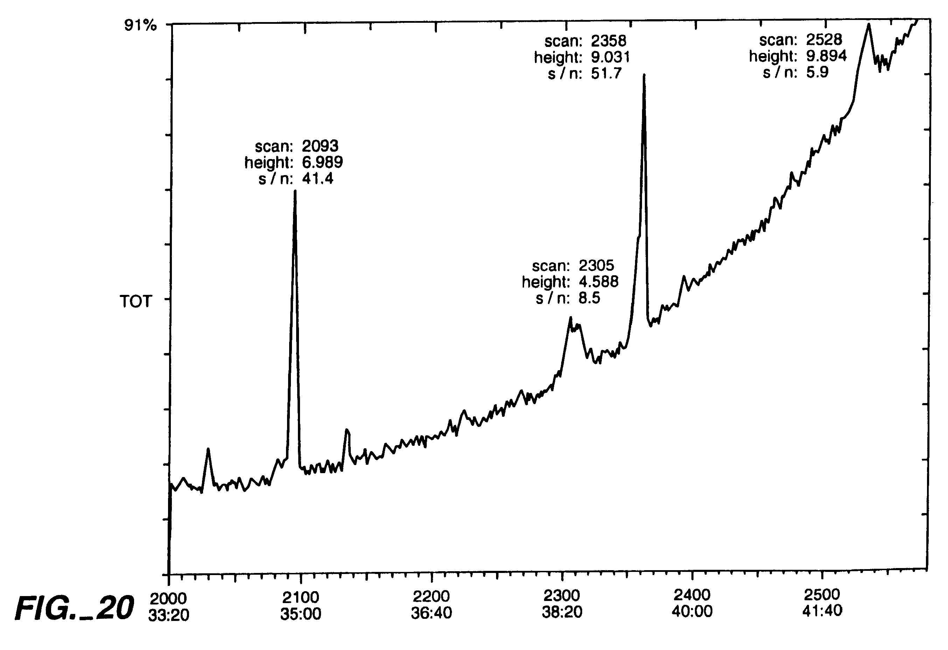

Figure 20 illustrates a GC/MS c.p. of beer volatiles after 30 days storage under oxygen.

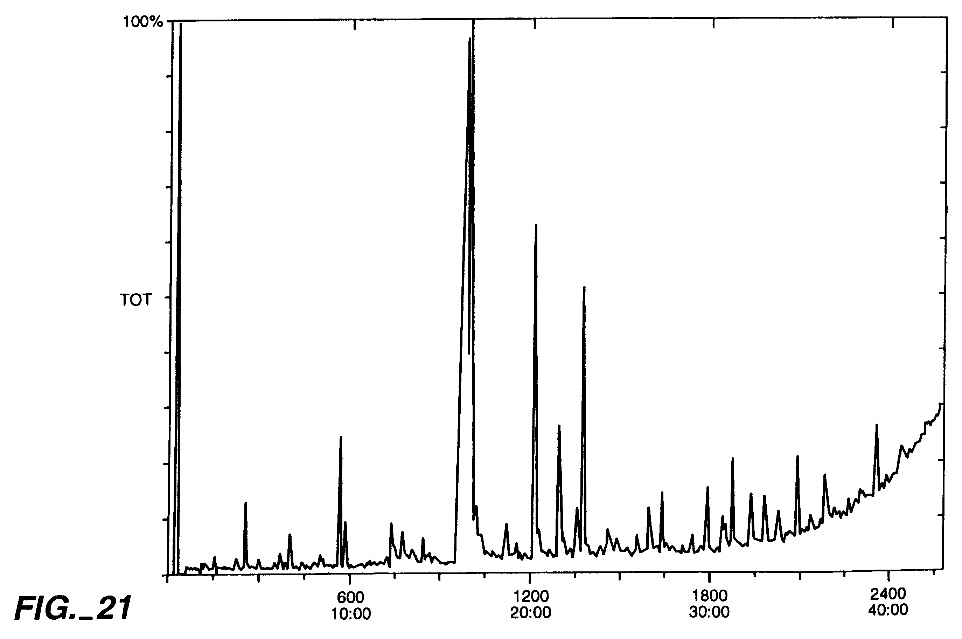

Figure 21 illustrates a GC/MS c.p. of beer volatiles after 30 days storage under nitrogen.

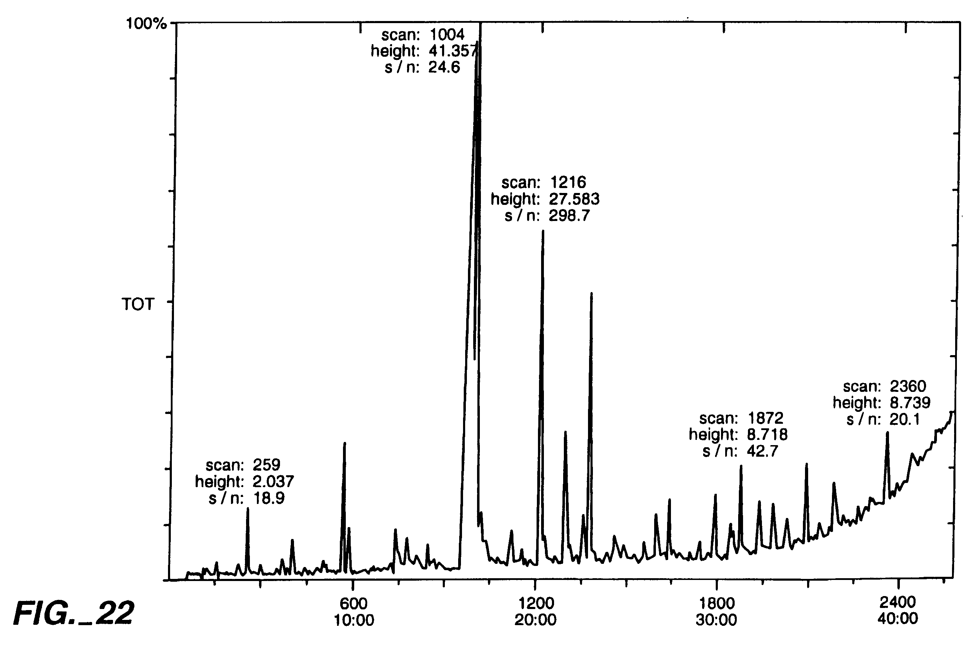

Figure 22 illustrates a GC/MS c.p. of beer volatiles after 30 days storage under nitrogen.

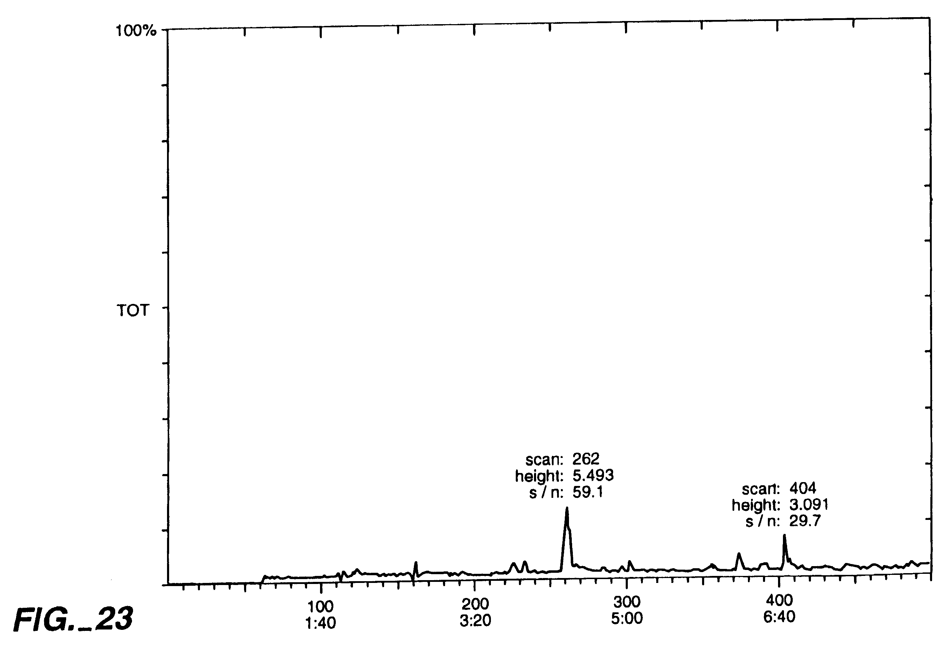

Figure 23 illustrates a GC/MS c.p. of beer volatiles after 30 days storage under nitrogen.

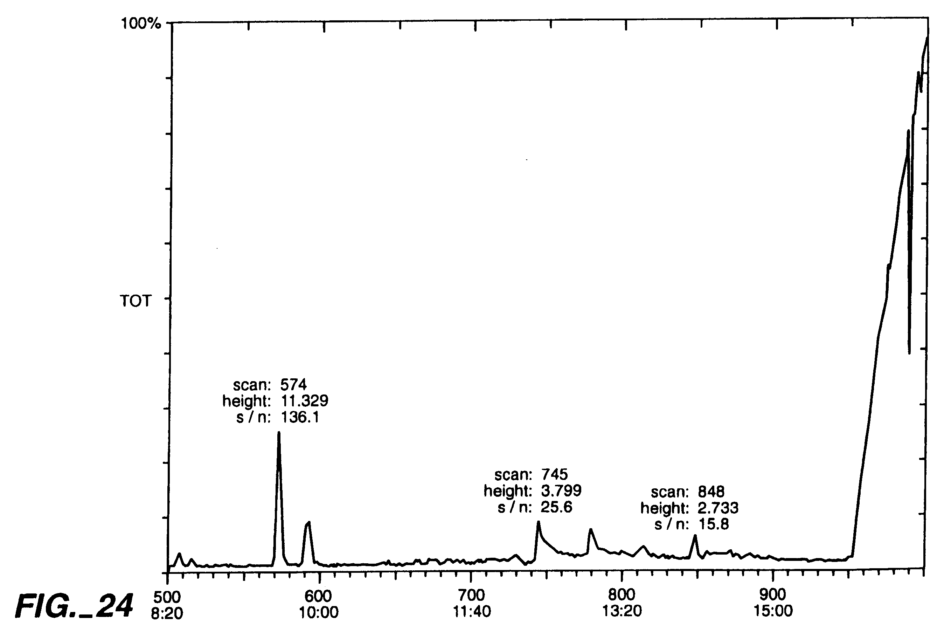

Figure 24 illustrates a GC/MS c.p. of beer volatiles after 30 days storage under nitrogen.

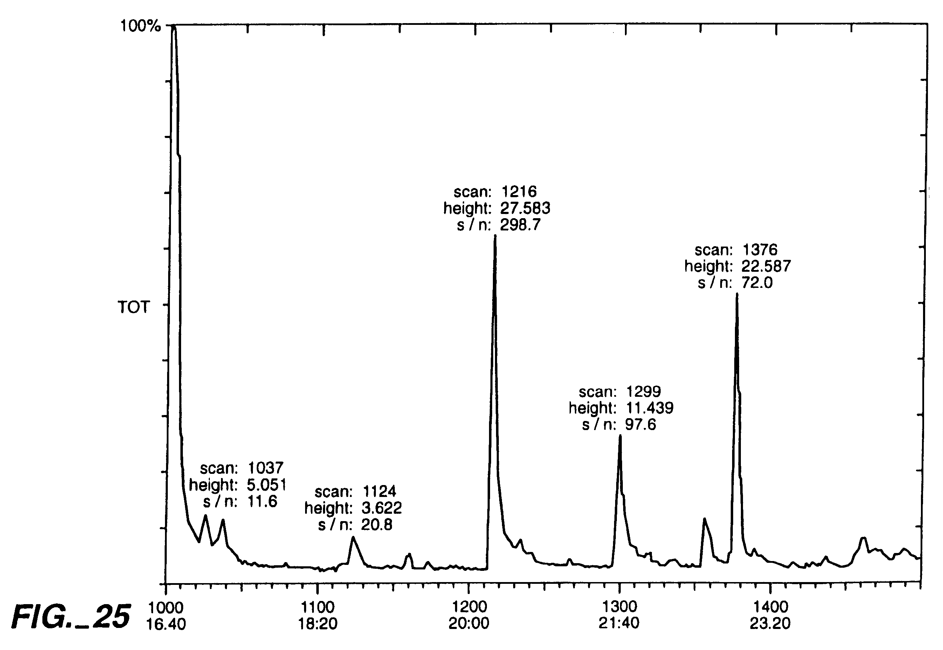

Figure 25 illustrates a GC/MS c.p. of beer volatiles after 30 days storage under nitrogen.

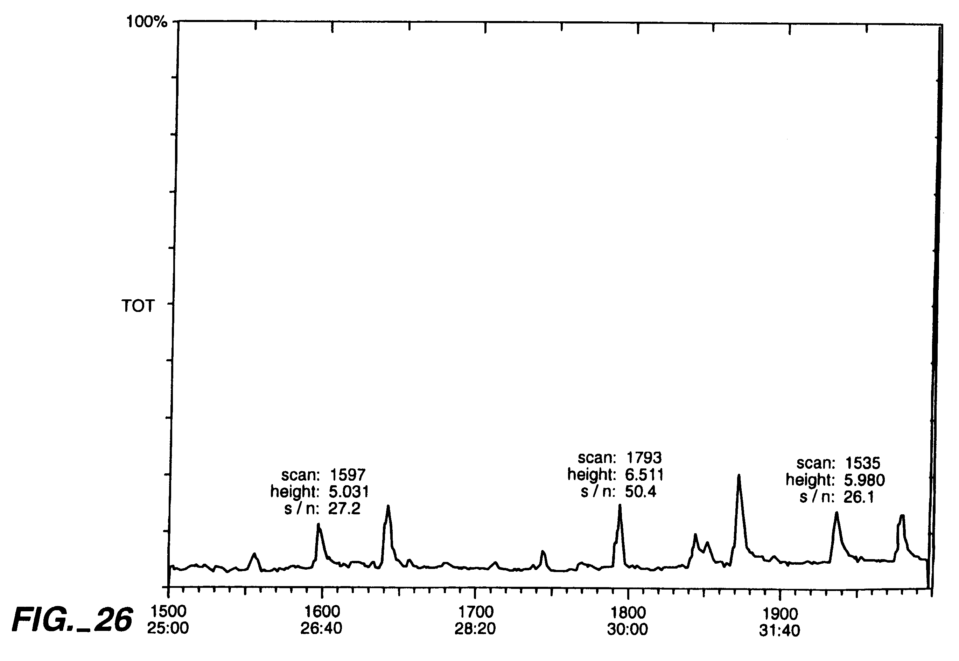

Figure 26 illustrates a GC/MS c.p. of beer volatiles after 30 days storage under nitrogen.

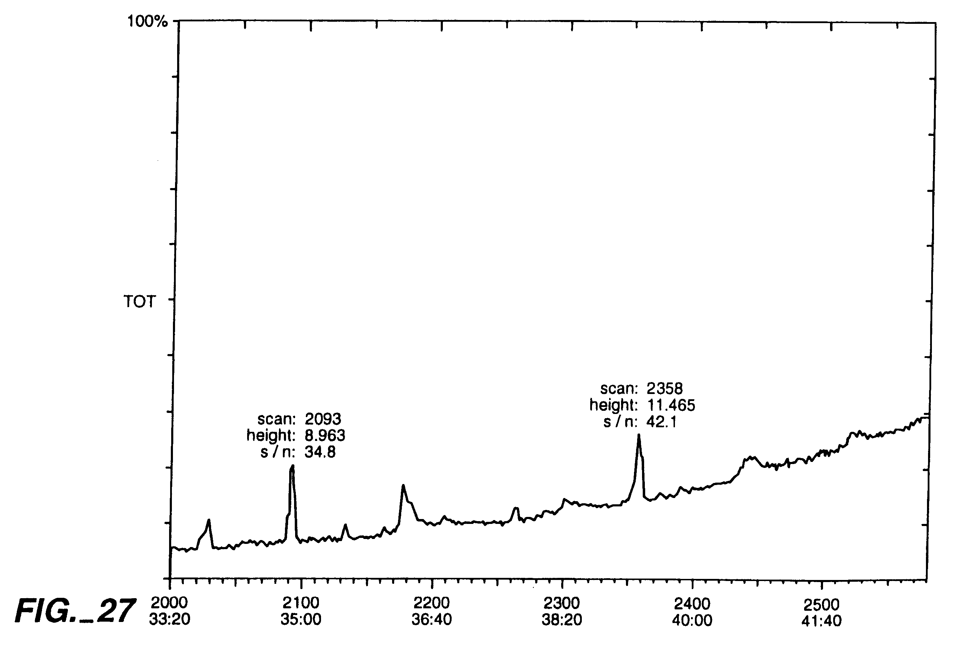

Figure 27 illustrates a GC/MS c.p. of beer volatiles after 30 days storage under nitrogen.

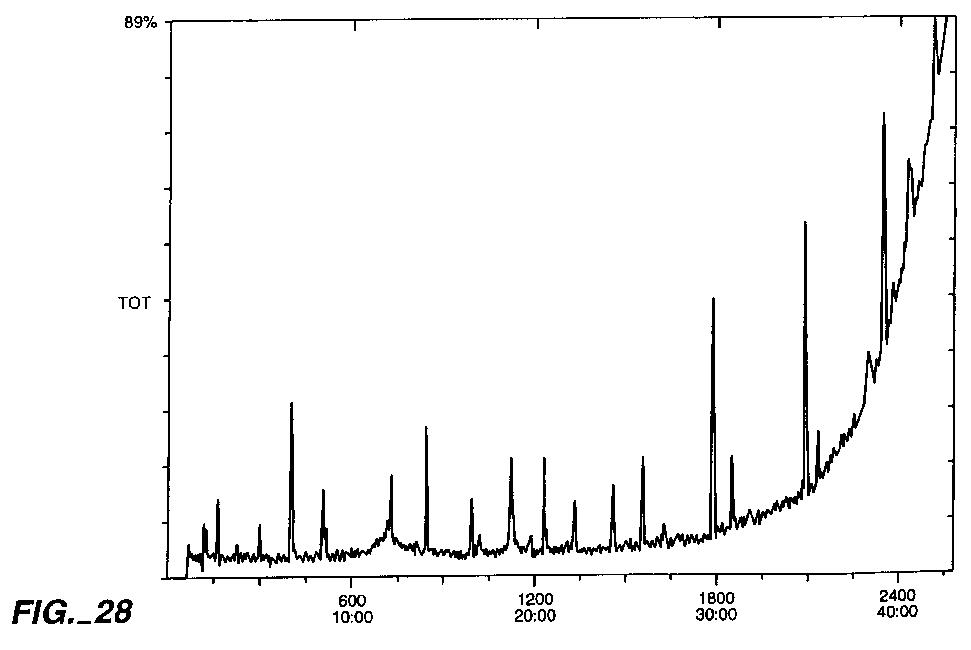

Figure 28 illustrates a GC/MS c.p. of beer volatiles after 30 days storage under argon.

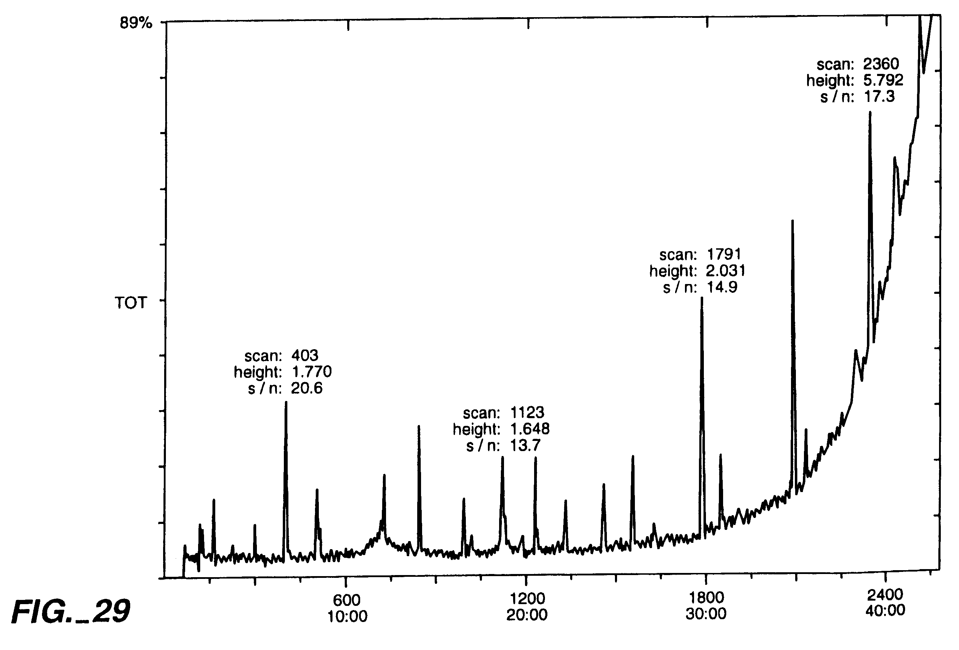

Figure 29 illustrates a GC/MS c.p. of beer volatiles after 30 days storage under argon.

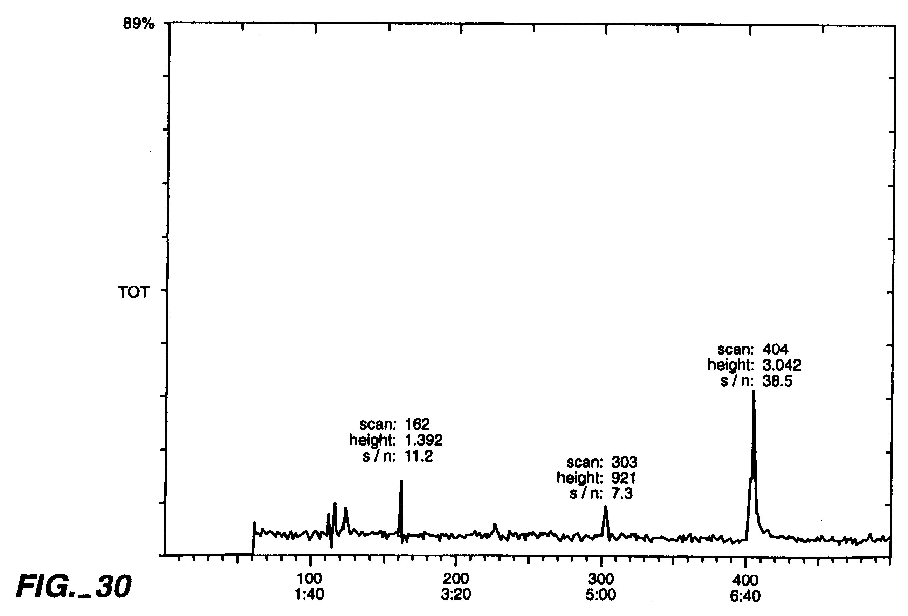

Figure 30 illustrates a GC/MS c.p. of beer volatiles after 30 days storage under argon.

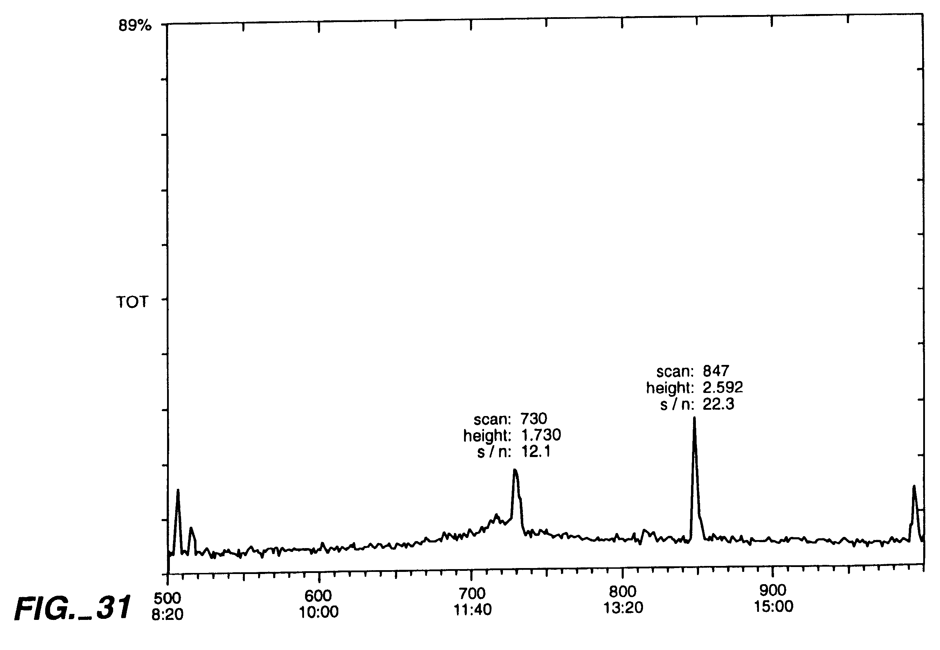

Figure 31 illustrates a GC/MS c.p. of beer volatiles after 30 days storage under argon.

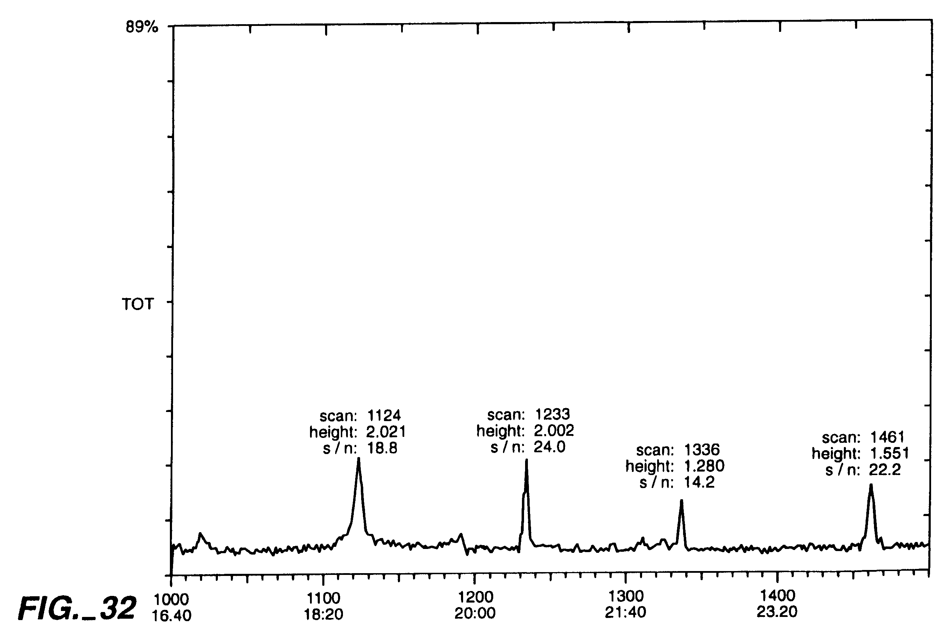

Figure 32 illustrates a GC/MS c.p. of beer volatiles after 30 days storage under argon.

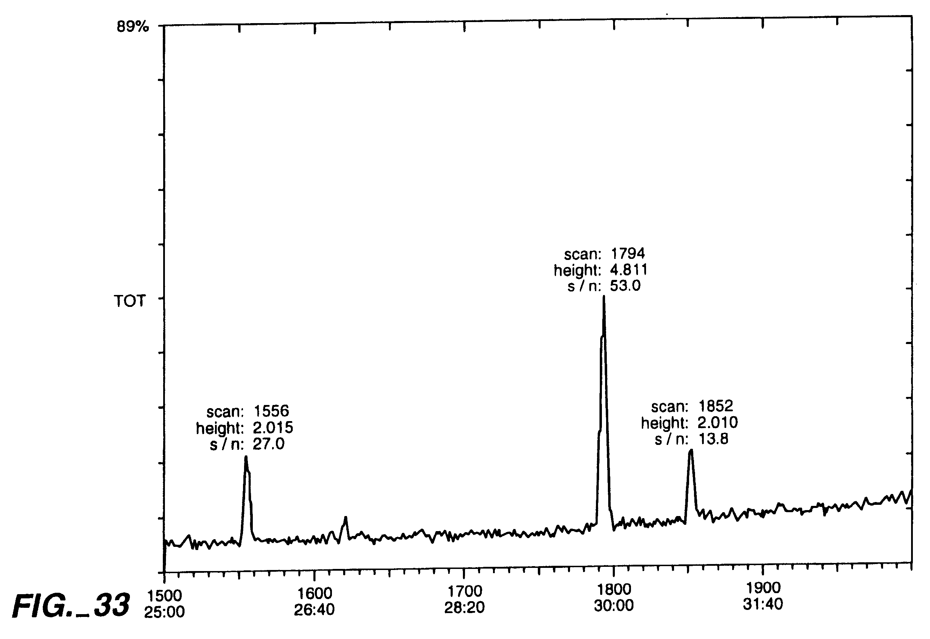

Figure 33 illustrates a GC/MS c.p. of beer volatiles after 30 days storage under argon.

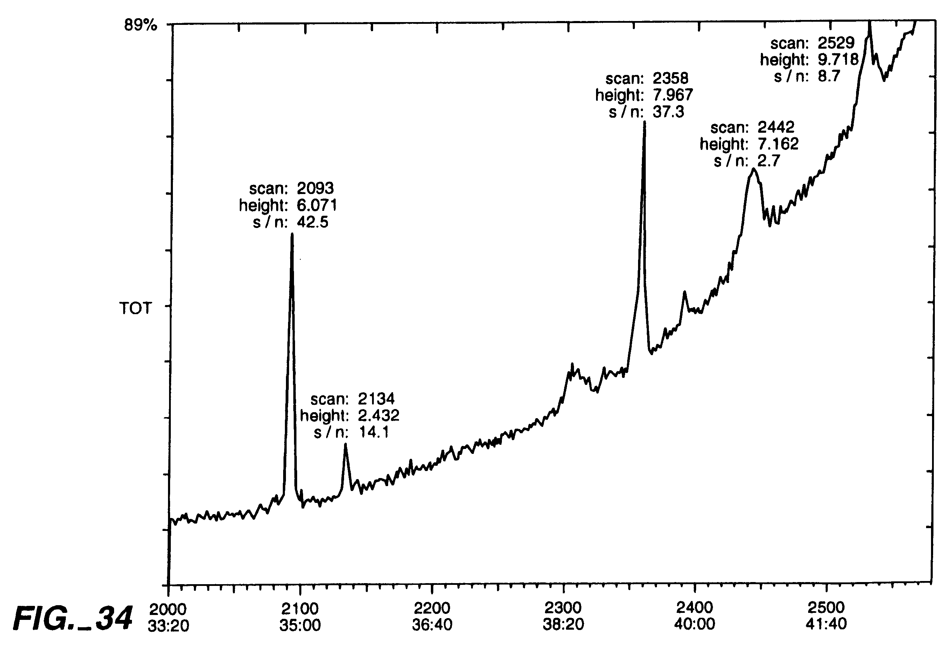

Figure 34 illustrates a GC/MS c.p. of beer volatiles after 30 days storage under argon.

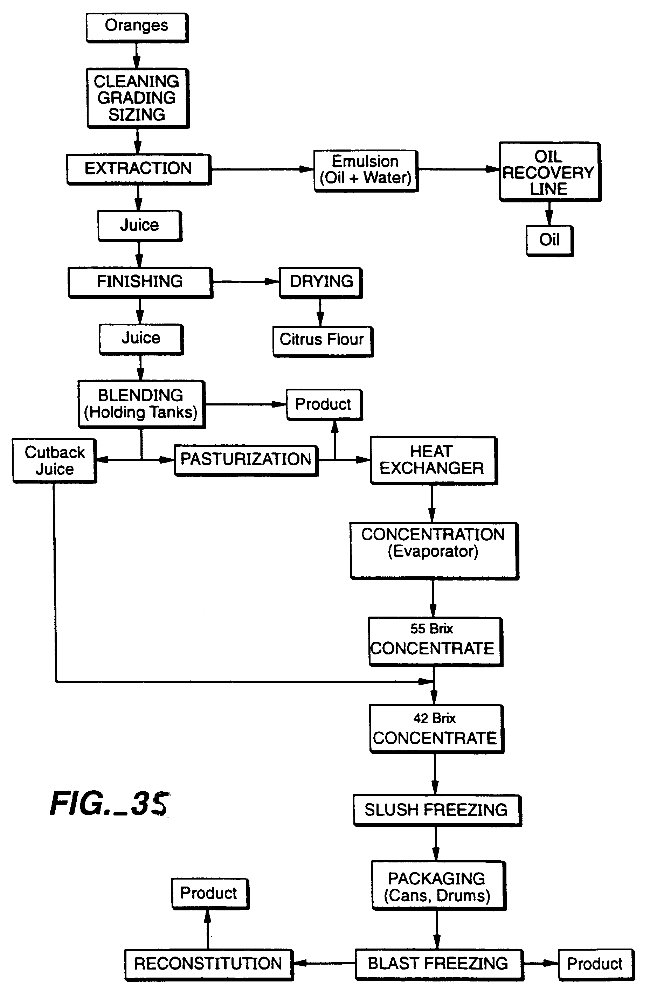

Figure 35 is a schematic illustration of a production process of orange juice from oranges.

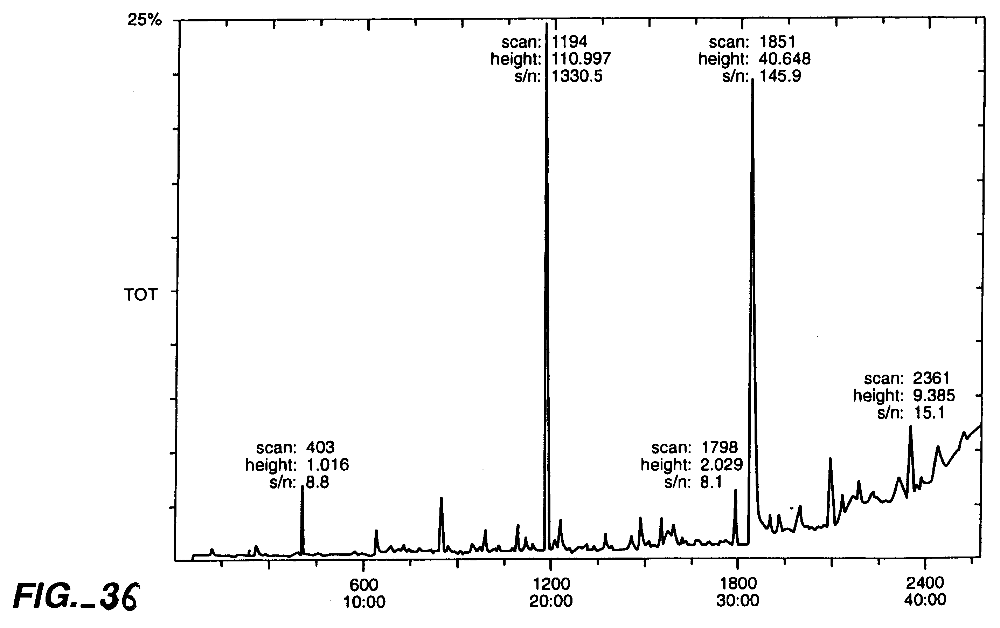

Figure 36 illustrates a GC/MS of oragne juice aroma volatiles under argon.

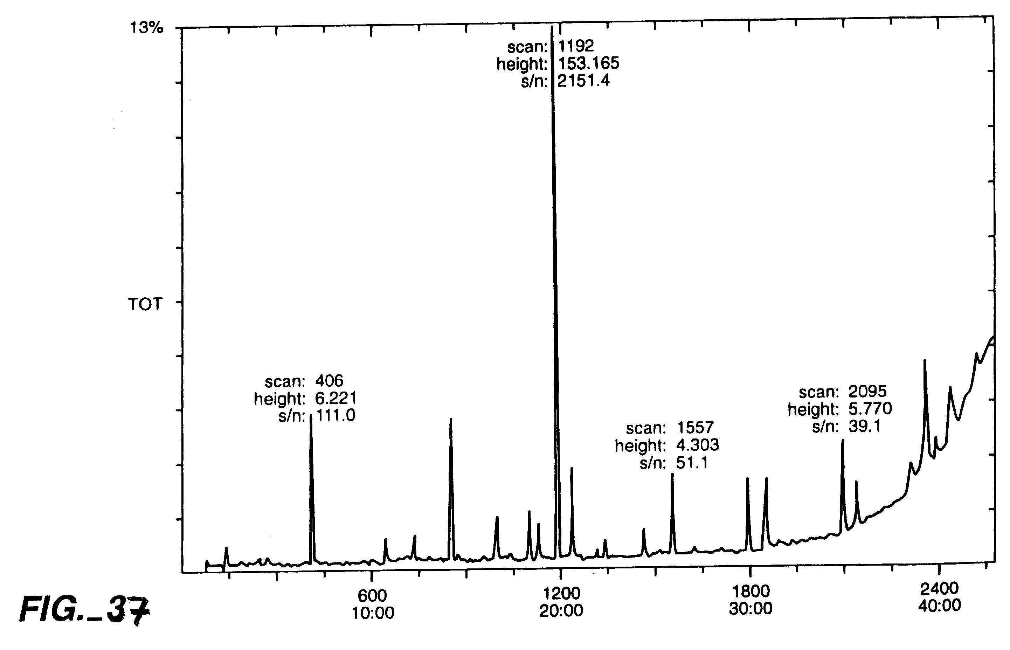

Figure 37 illustrates a GC/MS of orange juice aroma volatiles under nitrogen.

Figure 38 illustrates a GC/MS of orange juice aroma volatiles under oxygen.

Generally, in accordance with the present invention, beverages such as beer, ale, stout, soft drinks, such as all colas and citrus juices, such as all orange juice may be preserved.

Illustrative, but non-limitative examples of citrus or other juices include orange juice, lemon juice, lime juice, pineapple juice and apple juice.

Further, it is understood that the effect of the present invention may be obtained by using the gases, gas mixtures, liquids or liquid mixtures of the present invention through all stages of processing or storage of the beverages or edible oils or during any one stage or portion thereof.

## Claims

1. A method of preserving a beverage characterized by saturating the same to an extent of at least 50% of full saturation thereof during at least a portion of processing or storage thereof with an atmosphere consisting essentially of a noble gas selected from the group consisting of argon, xenon, neon and krypton and a mixture thereof, and wherein said saturation is achieved by sparging said atmosphere into said beverage.

2. The method of Claim 1, further characterized by said beverage being citrus fruit juice.

3. The method of Claim 1, further characterized by said <u>beverage</u> being orange juice.

4. The method of Claim 1, further characterized by said beverage being beer.

5. The method of Claim 1, further characterized by said beverage being saturated at least during storage thereof.

6. The method according to one of Claims 1 to <u>5</u>, further characterized by said noble gas being argon.

7. The method according to one of Claims 1 to <u>5</u>, further characterized by said mixture of noble gases being 90:10 krypton/xenon.

8. The method according to one of Claims 1 to <u>7</u>, further characterized by being effected at a temperature of 0°C to 60°C.

9. The method of Claim <u>8</u>, further characterized by being effected at a temperature of 10°C to 30°C.

10. The method according to one of Claims 1 to <u>9</u>, further characterized by said atmosphere being at a pressure of less than $1,013 . 10^6$ Pa (10 atm).

11. The method of Claim <u>10</u>, further characterized by said atmosphere being at a pressure of up to $3 . 1,013 . 10^5$ Pa (3 atm).

12. The method of Claim <u>11</u>, further characterized by said atmosphere being at a pressure of $1,013 . 10^5$ Pa (1 atm).

13. The method according to one of Claims 1 to <u>12</u>, further characterized by said saturation with said atmosphere being more than 70% of full saturation therewith.

14. The method of Claim <u>13</u>, further characterized by said saturation with said atmosphere being least 80% of full saturation therewith.

15. The method according to one of Claims 1 to <u>14</u>, further characterized by said atmosphere further containing a carrier gas selected from the group consisting of nitrogen, oxygen or air.

## Patentansprüche

1. Verfahren zum Haltbarmachen eines Getränks, dadurch gekennzeichnet, daß das Getränk während wenigstens eines Teils seiner Produktions- oder Lagerungsdauer bis zu mindestens 50% seiner vollen Sättigung mit einer Atmosphäre gesättigt wird, die im wesentlichen aus einem der Edelgase Argon, Yenon, Neon und Krypton oder einer Mischung daraus besteht, und wobei diese Sättigung dadurch erreicht wird, daß das Getränk mit der Atmosphöre durchperlt wird.

2. Ein Verfahren nach Anspruch 1, dadurch gekennzeichnet, daß das betreffende Getränk Zitrusfruchtsaft ist.

**3.** Ein Verfahren nach Anspruch 1, dadurch gekennzeichnet, daß das betreffende Getränk Orangensaft ist.

**4.** Ein Verfahren nach Anspruch 1, dadurch gekennzeichnet, daß das betreffende Getränk Bier ist.

**5.** Ein Verfahren nach Anspruch 1, dadurch gekennzeichnet, daß das betreffende Getränk mindestens während seiner Lagerung gesättigt wird.

**6.** Ein Verfahren nach einem der Ansprüche 1 bis 5, dadurch gekennzeichnet, daß das betreffende Edelgas Argon ist.

**7.** Ein Verfahren nach einem der Ansprüche 1 bis 5, dadurch gekennzeichnet, daß die betreffende Edelgasmischung aus einem Verhältnis von 90:10 Krypton/Xenon besteht.

**8.** Ein Verfahren nach einem der Ansprüche 1 bis 7, dadurch gekennzeichnet, daß es bei einer Temperatur von 0 °C bis 60 °C ausgeführt wird.

**9.** Ein Verfahren nach Anspruch 8, dadurch gekennzeichnet, daß es bei einer Temperatur von 10 °C bis 30 °C ausgeführt wird.

**10.** Ein Verfahren nach einem der Ansprüche 1 bis 9, dadurch gekeknnzeichnet, daß die betreffende Atmosphäre einen Druck von weniger als 1,013 x $10^6$ Pa (10 atm) hat.

**11.** Ein Verfahren nach Anspruch 10, dadurch gekeknnzeichnet, daß die betreffende Atmosphäre einen Druck von bis zu 3 x 1,013 x $10^5$ Pa (3 atm) hat.

**12.** Ein Verfahren nach Anspruch 11, dadurch gekeknnzeichnet, daß die betreffende Atmosphäre einen Druck von 1,013 x $10^5$ Pa (1 atm) hat.

**13.** Ein Verfahren nach einem der Ansprüche 1 bis 12, dadurch gekennzeichnet, daß die betreffende Sättigung mit der betreffenden Atmosphäre mehr als 70 % der vollen Sättigung beträgt.

**14.** Ein Verfahren nach Anspruch 13, dadurch gekennzeichnet, daß die betreffende Sättigung mit der betreffenden Atmosphäre mindestens 80 % der vollen Sättigung beträgt.

**15.** Ein Verfahren nach einem der Ansprüche 1 bis 14, dadurch gekennzeichnet, daß die betreffende Atmosphäre darüberhinaus Stickstoff, Sauerstoff oder Luft als Trägergas enthält.

**Revendications**

**1.** Procédé pour conserver une boisson, caractérisé par le fait qu'on la sature, jusqu'à au moins 50% de sa saturation totale, pendant au moins une partie de son traitement ou de son chauffage, avec une atmosphère essentiellement constituée d'un gaz noble choisi dans le groupe constitué par l'argon, le xénon, le néon et le krypton, et un mélange de ceux-ci, et par le fait que l'on obtient ladite saturation en faisant barboter ladite atmosphère dans ladite boisson.

**2.** Procédé selon la revendication 1, caractérisé, en outre, par le fait que ladite boisson est un jus d'agrume.

**3.** Procédé selon la revendication 1, caractérisé, en outre, par le fait que ladite boisson est un jus d'orange.

**4.** Procédé selon la revendication 1, caractérisé, en outre, par le fait que ladite boisson est une bière.

**5.** Procédé selon la revendication 1, caractérisé, en outre, par le fait que ladite boisson est saturée au moins pendant son stockage.

**6.** Procédé selon l'une des revendications 1 à 5, caractérisé, en outre, par le fait que ledit gaz noble est l'argon.

**7.** Procédé selon l'une des revendications 1 à 5, caractérisé, en outre, par le fait que ledit mélange de gaz nobles est un mélange krypton/xénon à 90/10.

**8.** Procédé selon l'une des revendications 1 à 7, caractérisé, en outre, par le fait qu'il est réalisé à une température de 0°C à 60°C.

**9.** Procédé selon la revendication 8, caractérisé, en outre, par le fait qu'il est réalisé à une température de 10°C à 30°C.

**10.** Procédé selon l'une des revendications 1 à 9, caractérisé, en outre, par le fait que ladite atmosphère est sous une pression inférieure à 1,013. $10^6$ Pa (10 atm).

**11.** Procédé selon la revendication 10, caractérisé, en outre, par le fait que ladite atmosphère est sous une pression d'au plus 3. 1,013. $10^5$ Pa (3 atm).

**12.** Procédé selon la revendication 11, caractérisé, en outre, par le fait que ladite atmosphère est sous une pression de 1,013. $10^5$ Pa (1 atm).

13. Procédé selon l'une des revendications 1 à 12, caractérisé, en outre, par le fait que ladite saturation avec ladite atmosphère représente plus de 70% de la saturation totale avec cette dernière.

14. Procédé selon la revendication 13, caractérisé, en outre, par le fait que ladite saturation avec ladite atmosphère représente au moins 80% de la saturation totale avec cette dernière.

15. Procédé selon l'une des revendications 1 à 14, caractérisé, en outre, par le fait que ladite atmosphère contient aussi un gaz vecteur choisi dans le groupe constitué par l'azote, l'oxygène ou l'air.

FIG._1

EP 0 587 869 B2

FIG._2

EP 0 587 869 B2

FIG._3

*FIG._4*

**FIG._5**

EP 0 587 869 B2

*FIG._6*

FIG._7

FIG._8

FIG._9

13%

TOT

scan: 1557
height: 4.303
s / n: 51.1

scan: 1795
height: 4.062
s / n: 65.9

*FIG._10*  1500    1600    1700    1800    1900
25:00    26:40    28:20    30:00    31:40

FIG._11

FIG._12

FIG._13

EP 0 587 869 B2

FIG._14

**FIG._15**

scan: 2358
height: 9.031
s / n: 51.7

scan: 2095
height: 5.029
s / n: 26.1

scan: 1792
height: 2.868
s / n: 22.2

scan: 406
height: 2.155
s / n: 29.5

scan: 1126
height: 2.228
s / n: 13.4

91%

TOT

600
10:00

1200
20:00

1800
30:00

2400
40:00

EP 0 587 869 B2

FIG._16

91%

TOT

scan: 731
height: 1.920
s / n: 10.5

scan: 849
height: 2.063
s / n: 19.6

scan: 953
height: 864
s / n: 7.8

*FIG._17*

500
8:20

600
10:00

700
11:40

800
13:20

900
15:00

EP 0 587 869 B2

FIG._18

scan: 1794
height: 4.612
s / n: 41.6

TOT

scan: 1556
height: 1.603
s / n: 11.9

scan: 1891
height: 1.513
s / n: 4.6

91%

FIG._19

| 1500 | 1600 | 1700 | 1800 | 1900 |
| 25:00 | 26:40 | 28:20 | 30:00 | 31:40 |

EP 0 587 869 B2

FIG._20

91%

scan: 2093
height: 6.989
s / n: 41.4

scan: 2358
height: 9.031
s / n: 51.7

scan: 2528
height: 9.894
s / n: 5.9

scan: 2305
height: 4.588
s / n: 8.5

TOT

2000
33:20

2100
35:00

2200
36:40

2300
38:20

2400
40:00

2500
41:40

EP 0 587 869 B2

FIG._21

EP 0 587 869 B2

FIG._22

100%

TOT

scan: 262
height: 5.493
s / n: 59.1

scan: 404
height: 3.091
s / n: 29.7

|   100   |   200   |   300   |   400   |
|  1:40   |  3:20   |  5:00   |  6:40   |

*FIG._23*

FIG._24

scan: 574
height: 11.329
s / n: 136.1

scan: 745
height: 3.799
s / n: 25.6

scan: 848
height: 2.733
s / n: 15.8

100%

TOT

500      600           700           800           900
8:20    10:00         11:40         13:20         15:00

EP 0 587 869 B2

FIG._25

FIG._26

EP 0 587 869 B2

*FIG._27*

EP 0 587 869 B2

FIG._28

EP 0 587 869 B2

FIG._29

FIG._30

FIG._31

*FIG._32*

FIG._33

89%

TOT

scan: 1556
height: 2.015
s / n: 27.0

scan: 1794
height: 4.811
s / n: 53.0

scan: 1852
height: 2.010
s / n: 13.8

1500    1600    1700    1800    1900
25:00   26:40   28:20   30:00   31:40

EP 0 587 869 B2

FIG._34

2000          2100          2200          2300          2400          2500
33:20         35:00         36:40         38:20         40:00         41:40

scan: 2093
height: 6.071
s / n: 42.5

scan: 2134
height: 2.432
s / n: 14.1

scan: 2358
height: 7.967
s / n: 37.3

scan: 2442
height: 7.162
s / n: 2.7

scan: 2529
height: 9.718
s / n: 8.7

89%

TOT

EP 0 587 869 B2

**FIG._35**

FIG._36

FIG._37

*FIG._38*